(19) Europäisches Patentamt
European Patent Office
Office européen des brevets

(11) **EP 4 546 914 A1**

(12) **EUROPEAN PATENT APPLICATION**
published in accordance with Art. 153(4) EPC

(43) Date of publication:
**30.04.2025   Bulletin 2025/18**

(21) Application number: **23841965.9**

(22) Date of filing: **13.06.2023**

(51) International Patent Classification (IPC):
*H04W 72/04* (2023.01)

(52) Cooperative Patent Classification (CPC):
**H04W 72/04; H04W 72/0446; H04W 72/566;
H04W 74/0808**

(86) International application number:
**PCT/CN2023/099916**

(87) International publication number:
**WO 2024/016899 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.07.2022   CN 202210858843**

(71) Applicant: **Huawei Technologies Co., Ltd.
Shenzhen, Guangdong 518129 (CN)**

(72) Inventors:
• **QI, Hong**
  **Shenzhen, Guangdong 518129 (CN)**
• **SU, Hongjia**
  **Shenzhen, Guangdong 518129 (CN)**
• **HE, Hongli**
  **Shenzhen, Guangdong 518129 (CN)**
• **MI, Xiang**
  **Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND COMMUNICATION APPARATUS**

(57)    This application relates to the field of wireless communication technologies, and provides a communication method and a communication apparatus, to reduce a data transmission delay, and ensure quality of service of a service. The method includes: A first terminal device performs first channel access, to obtain first COT of a first channel resource, where the first COT includes n first time units and a first time period in an $(n+1)^{th}$ first time unit, the first COT is continuous in time, a length of the first time period is less than a length of the first time unit, L may be determined based on a channel access priority class p, and n is an integer greater than or equal to 0. The first terminal device sends data to a second terminal device in the first COT by using the first channel resource. Specifically, L is determined based on the following parameters: a contention window size $CW_p$ corresponding to p and a quantity $m_p$ of continuous sensing time units corresponding to p.

FIG. 12

**Description**

**TECHNICAL FIELD**

Embodiments of this application relate to the field of wireless communication, and in particular, to a communication method and a communication apparatus.

**BACKGROUND**

In a wireless communication system, frequency bands used by a communication device may be classified into a licensed (Licensed) frequency band and an unlicensed (Unlicensed) frequency band. On the licensed frequency band, the communication device uses a spectrum resource based on scheduling of a central node. On the unlicensed frequency band, the communication device contends for a channel by using a channel access mechanism (for example, a listen-before-talk (listen-before-talk, LBT) mechanism).

The LBT mechanism is a channel access rule based on random backoff. Before accessing a channel and starting to send data, the communication device needs to sense (sense) whether the channel is idle (idle). If the channel is kept idle for a period of time, the communication device can occupy the channel and send the data on the channel. Duration for which the channel is occupied is referred to as channel occupancy time (channel occupancy time, COT).

On sidelink-unlicensed (sidelink-unlicensed, SL-U) in the 3rd Generation Partnership Project (3rd Generation Partnership Project, 3GPP) new radio (new radio, NR) technology, data is transmitted in slots (Slots). One slot includes 14 orthogonal frequency division multiplexing (orthogonal frequency division multiplexing, OFDM) symbols. To be specific, after performing LBT, a communication device in an SL-U system (SL-U device for short) cannot immediately send data until a next slot starts.

Channel access of a communication device in a wireless fidelity (Wireless Fidelity, Wi-Fi) system (Wi-Fi device for short) also needs to comply with an LBT principle. However, the Wi-Fi device can perform channel sensing and access at any time point, without considering time alignment.

Therefore, when the SL-U device completes LBT and waits for data transmission, because the SL-U device does not actually occupies a channel, the channel may be preempted by the Wi-Fi device, and consequently the SL-U device finally fails to preempt the channel. This affects a data transmission delay and finally affects quality of service (quality of service, QoS) of a service of the SL-U device.

**SUMMARY**

Embodiments of this application provide a communication method and a communication apparatus, to reduce a data transmission delay, and ensure QoS of a service.

According to a first aspect, an embodiment of this application provides a communication method. The method may be performed by a first terminal device. The method includes: the first terminal device performs first channel access, to obtain first channel occupancy time COT of a first channel resource, where the first COT includes n first time units and a first time period in an $(n+1)^{th}$ first time unit, the first COT is continuous in time, a length L of the first time period is less than a length of the first time unit, and n is an integer greater than or equal to 0; and further, the first terminal device sends first data to a second terminal device in the first COT by using the first channel resource, where L is determined based on a channel access priority class p.

Specifically, L may be determined based on at least one of the following parameters: a contention window size $CW_p$ corresponding to the channel access priority class p and/or a quantity $m_p$ of continuous sensing time units corresponding to p.

To be specific, the first terminal device may obtain, based on the channel access priority class p, the contention window size $CW_p$ and $m_p$ that correspond to p, to determine a moment (an end moment of the first time period), in the last slot, at which sending is terminated in advance, so that the first terminal device and/or another terminal device can start channel access after the first time period in the slot and complete channel access before a next slot starts, to send data when the next slot starts. This method can increase a probability of sending data in the next slot, thereby reducing a data transmission delay, and meeting a QoS requirement of a service.

In a possible design, the method further includes: the first terminal device starts second channel access after the first COT ends, to obtain second COT of a second channel resource, where the second COT includes an $(n+2)^{th}$ first time unit; and if a start moment of the second COT is earlier than an end moment of the $(n+1)^{th}$ first time unit, the first terminal device sends a first signal from the start moment of the second COT to the end moment of the $(n+1)^{th}$ first time unit. Specifically, the first signal is a cyclic shift extension CPE.

The first terminal device sends the CPE, to occupy a channel resource from a moment at which channel access is completed to the end moment of the $(n+1)^{th}$ first time unit (a start moment of the $(n+2)^{th}$ first time unit), to prevent the channel resource from being preempted by another terminal device and consequently the first terminal device cannot send data in the $(n+2)^{th}$ time unit. Therefore, a data transmission delay can also be reduced.

In a possible design, the method specifically includes: when a first condition is met, the first terminal device obtains the first COT, where the first condition includes at least one of the following: the first terminal device determines to send second data in the $(n+2)^{th}$ first time unit; the first terminal device receives first indication information, where the first indication information indicates that at least one third terminal device reserves a resource of the $(n+2)^{th}$ first time unit, and a data priority of the at least one third terminal device is higher than a data priority of the first terminal device; or the first terminal device receives second indication information from an access network device, where the second indication information indicates L.

In a possible design, the channel access priority class p includes at least one of the following: a channel access priority class of the first terminal device; or a channel access priority class of a fourth terminal device, where the fourth terminal device belongs to the at least one third terminal device.

In a possible design, the channel access priority class of the fourth terminal device is a channel access priority class of a third terminal device with a lowest priority in a channel access priority class of the at least one third terminal device. Correspondingly, the fourth terminal device is the third terminal device with the lowest priority in the at least one third terminal device.

L is determined by using the channel access priority class p of the first terminal device having a higher priority than the first terminal device, so that channel access time of the fourth terminal device can be better matched, thereby reducing a data transmission delay of the fourth terminal device. In addition, longer L may be obtained by using a higher channel access priority. This also helps the first terminal device send more data in the $(n+1)^{th}$ time unit.

In a possible design, the first time unit is a slot, L represents a quantity of orthogonal frequency division multiplexing OFDM symbols, one slot includes N OFDM symbols, and L satisfies the following calculation formula:

$$L = N - ceil((CW_p \times T_{sl} + T_d)/t_{symbol})$$

, where $T_{sl}$ is a sensing time unit and represents a minimum sensing granularity at which the first terminal device performs channel access, $T_d$ is first duration for sensing a channel, namely, defer duration for detecting that the channel is idle in channel sensing, $T_d$ includes duration $T_f$ and $m_p$ $T_{sl}$, and $t_{symbol}$ is duration of one OFDM symbol.

In a possible design, the method further includes: the first terminal device sends third indication information to the second terminal device, where the third indication information indicates L. By using the third indication information, the second terminal device can accurately learn of a quantity of OFDM symbols, in the $(n+1)^{th}$ slot, for transmitting data, to correctly receive the data from the first terminal device.

In a possible design, the first indication information is sidelink control information SCI or a media access control control element (MAC CE) from the at least one third terminal device, and the SCI or the MAC CE includes the channel access priority class of the at least one third terminal device; and

the second indication information is downlink control information DCI of an $i^{th}$ first time unit, and the DCI includes at least one of the following information: (n-i+1)*N+L OFDM symbols; or n-i+1 slots and L OFDM symbols; or
the second indication information is DCI of the $(n+1)^{th}$ first time unit, and the DCI includes L, where
the first time unit is a slot, L represents a quantity of orthogonal frequency division multiplexing OFDM symbols, one slot includes N OFDM symbols, and i is an integer greater than 0 and less than or equal to n+1.

In a possible design, the first indication information is an SCI or a MAC CE from the at least one third terminal device, the SCI or the MAC CE includes the data priority of the at least one third terminal device, and the channel access priority class is associated with a data priority class.

In a possible design, the third indication information is SCI or a MAC CE of an $i^{th}$ first time unit, and the SCI or the MAC CE includes at least one of the following information: (n-i+1)*N+L OFDM symbols; or n-i+1 slots and L OFDM symbols; or

the third indication information is SCI or a MAC CE of the $(n+1)^{th}$ first time unit, and the SCI or the MAC CE includes L, where
the first time unit is a slot, L represents a quantity of orthogonal frequency division multiplexing OFDM symbols, one slot includes N OFDM symbols, and i is an integer greater than 0 and less than or equal to n+1.

According to a second aspect, an embodiment of this application provides a communication method. The method may be performed by a second terminal device. The method includes: the second terminal device receives third indication information from a first terminal device, where the third indication information indicates a length L of a first time period, the first time period belongs to first channel occupancy time COT of the first terminal device, the first COT includes n first time units and the first time period in an $(n+1)^{th}$ first time unit, the first COT is continuous in time, and the length of the first time period is less than a length of the first time unit; and the second terminal device receives data from the first terminal device in the first COT based on the third indication information.

By using the third indication information, the second terminal device can accurately learn of a quantity of OFDM symbols, in the $(n+1)^{th}$ slot, for transmitting data, to correctly receive the data from the first terminal device.

In a possible design, the third indication information is SCI or a MAC CE of an $i^{th}$ first time unit, and the SCI or the MAC CE includes at least one of the following information: (n-i+1)*N+L OFDM symbols; or n-i+1 slots and L OFDM symbols;

or

the third indication information is SCI or a MAC CE of the $(n+1)^{th}$ first time unit, and the SCI or the MAC CE includes L, where

the first time unit is a slot, L represents a quantity of orthogonal frequency division multiplexing OFDM symbols, one slot includes N OFDM symbols, and i is an integer greater than 0 and less than or equal to n+1.

According to a third aspect, an embodiment of this application provides a communication apparatus. The communication apparatus may be the first terminal device in the first aspect. The communication apparatus includes a processor and a transceiver. The processor controls the transceiver to perform first channel access, to obtain first channel occupancy time COT of a first channel resource, where the first COT includes n first time units and a first time period in an $(n+1)^{th}$ first time unit, the first COT is continuous in time, a length L of the first time period is less than a length of the first time unit, and n is an integer greater than or equal to 0; and further, sends, through the transceiver, first data to a second terminal device in the first COT by using the first channel resource, where L is determined based on a channel access priority class p.

Specifically, L may be determined based on at least one of the following parameters: a contention window size $CW_p$ corresponding to the channel access priority class p and/or a quantity $m_p$ of continuous sensing time units corresponding to p.

In a possible design, the processor controls the transceiver to start second channel access after the first COT ends, to obtain second COT of a second channel resource, where the second COT includes an $(n+2)^{th}$ first time unit; and if a start moment of the second COT is earlier than an end moment of the $(n+1)^{th}$ first time unit, the first terminal device sends a first signal from the start moment of the second COT to the end moment of the $(n+1)^{th}$ first time unit. Specifically, the first signal is a cyclic shift extension CPE.

In a possible design, when a first condition is met, the first COT is obtained through the processor, where the first condition includes at least one of the following: determining to send second data in the $(n+2)^{th}$ first time unit; receiving first indication information through the transceiver, where the first indication information indicates that at least one third terminal device reserves a resource of the $(n+2)^{th}$ first time unit, and a data priority of the at least one third terminal device is higher than a data priority of the communication apparatus; or receiving second indication information from an access network device through the transceiver, where the second indication information indicates L.

In a possible design, the channel access priority class p includes at least one of the following: a channel access priority class of the communication apparatus; or a channel access priority class of a fourth terminal device, where the fourth terminal device belongs to the at least one third terminal device.

In a possible design, the channel access priority class of the fourth terminal device is a channel access priority class of a third terminal device with a lowest priority in a channel access priority class of the at least one third terminal device. Correspondingly, the fourth terminal device is the third terminal device with the lowest priority in the at least one third terminal device.

In a possible design, the first time unit is a slot, L represents a quantity of orthogonal frequency division multiplexing OFDM symbols, one slot includes N OFDM symbols, and L satisfies the following calculation formula:

$$L = N - ceil\big((CW_p \times T_{sl} + T_d)/t_{symbol}\big)$$

, where $T_{sl}$ is a sensing time unit and represents a minimum sensing granularity at which the communication apparatus performs channel access, $T_d$ is first duration for sensing a channel, $T_d$ includes duration $T_f$ and $m_p$ $T_{sl}$, $t_{symbol}$ is duration of one OFDM symbol, and the first duration is defer duration for detecting that the channel is idle in channel sensing.

In a possible design, the communication apparatus sends third indication information to the second terminal device through the transceiver, where the third indication information indicates L.

In a possible design, the first indication information is SCI or a MAC CE from the at least one third terminal device, and the SCI or the MAC CE includes the channel access priority class of the at least one third terminal device; and

the second indication information is downlink control information DCI of an $i^{th}$ first time unit, and the DCI includes at least one of the following information: (n-i+1)*N+L OFDM symbols; or n-i+1 slots and L OFDM symbols; or

the second indication information is DCI of the $(n+1)^{th}$ first time unit, and the DCI includes L, where the first time unit is a slot, L represents a quantity of orthogonal frequency division multiplexing OFDM symbols, one slot includes N OFDM symbols, and i is an integer greater than 0 and less than or equal to n+1.

In a possible design, the first indication information is an SCI or a MAC CE from the at least one third terminal device, the SCI or the MAC CE includes the data priority of the at least one third terminal device, and the channel access priority class is associated with a data priority class.

In a possible design, the third indication information is SCI or a MAC CE of an $i^{th}$ first time unit, and the SCI or the MAC CE includes at least one of the following information: (n-i+1)*N+L OFDM symbols; or n-i+1 slots and L OFDM symbols; or

the third indication information is SCI or a MAC CE of the $(n+1)^{th}$ first time unit, and the SCI or the MAC CE includes L, where

the first time unit is a slot, L represents a quantity of orthogonal frequency division multiplexing OFDM symbols, one slot includes N OFDM symbols, and i is an integer greater than 0 and less than or equal to n+1.

In a possible design, the communication apparatus further includes a memory, configured to store instructions for performing the methods in the first aspect and the various possible designs.

According to a fourth aspect, an embodiment of this application provides a communication apparatus. The communication apparatus may be the second terminal device in the second aspect. The communication apparatus includes a processor and a transceiver. The processor controls the transceiver to receive third indication information from a first terminal device, where the third indication information indicates a length L of a first time period, the first time period belongs to first channel occupancy time COT of the first terminal device, the first COT includes n first time units and the first time period in an $(n+1)^{th}$ first time unit, the first COT is continuous in time, and the length of the first time period is less than a length of the first time unit; and further, receive data from the first terminal device in the first COT based on the third indication information.

In a possible design, the third indication information is SCI or a MAC CE of an $i^{th}$ first time unit, and the SCI or the MAC CE includes at least one of the following information: (n-i+1)*N+L OFDM symbols; or n-i+1 slots and L OFDM symbols; or

the third indication information is SCI or a MAC CE of the $(n+1)^{th}$ first time unit, and the SCI or the MAC CE includes L, where

the first time unit is a slot, L represents a quantity of orthogonal frequency division multiplexing OFDM symbols, one slot includes N OFDM symbols, and i is an integer greater than 0 and less than or equal to n+1.

According to a fifth aspect, this application provides a communication apparatus, configured to implement a function of the first terminal device in the first aspect, or configured to implement a function of the second terminal device in the second aspect.

According to a sixth aspect, an embodiment of this application provides a communication apparatus, and the apparatus has a function of implementing the communication method according to any implementation in any one of the foregoing aspects. The function may be implemented by using hardware, or may be implemented by using hardware executing corresponding software. The hardware or the software includes one or more modules corresponding to the function.

According to a seventh aspect, an embodiment of this application provides a communication apparatus, including a processor and a memory. The memory is configured to store instructions, and when the processor executes the instructions stored in the memory, the communication apparatus performs the communication method according to any implementation in any one of the foregoing aspects.

According to an eighth aspect, an embodiment of this application provides a communication apparatus, including a processor. The processor is configured to: be couple to a memory, and after reading instructions in the memory, perform the communication method according to any implementation in any one of the foregoing aspects according to the instructions.

According to a ninth aspect, an embodiment of this application provides a computer-readable storage medium. The computer-readable storage medium stores instructions. When the instructions are run on a computer, the computer is enabled to perform the communication method according to any implementation in any one of the foregoing aspects.

According to a tenth aspect, an embodiment of this application provides a computer program product including instructions. When the computer program product is run on a computer, the computer is enabled to perform the communication method according to any implementation in any one of the foregoing aspects.

According to an eleventh aspect, an embodiment of this application provides a circuit system. The circuit system includes a processing circuit. The processing circuit is configured to perform the communication method according to any implementation in any one of the foregoing aspects.

According to a twelfth aspect, an embodiment of this application provides a chip. The chip includes a processor. The processor is coupled to a memory. The memory stores instructions. When the instructions stored in the memory are executed by the processor, the communication method according to any implementation in any one of the foregoing aspects is implemented.

According to a thirteenth aspect, an embodiment of this application provides a communication system. The communication system includes the first terminal device in any one of the foregoing aspects and the second terminal device in any one of the foregoing aspects.

For technical effects brought by any possible design of the second aspect to the thirteenth aspect, refer to technical effects brought by a possible design of the first aspect. Details are not described herein again.

## BRIEF DESCRIPTION OF DRAWINGS

FIG. 1 is a diagram of an architecture of a communication system to which an embodiment of this application is applied;
FIG. 2 is a diagram of an architecture of another communication system to which an embodiment of this application is applied;
FIG. 3 is a diagram of an architecture of still another communication system to which an embodiment of this application is applied;
FIG. 4 is a diagram of an architecture of a communication apparatus according to an embodiment of this application;
FIG. 5 is a diagram of an architecture of another communication apparatus according to an embodiment of this application;
FIG. 6 is a diagram of a process in which a terminal device performs channel access and information sending according to an embodiment of this application;
FIG. 7 is a diagram of a frame structure according to an embodiment of this application;
FIG. 8 is a diagram of another process in which a terminal device performs channel access and information sending according to an embodiment of this application;
FIG. 9 is a diagram of a resource allocation and data transmission process in a mode 1 according to an embodiment of this application;
FIG. 10 is a diagram of a cyclic shift extension according to an embodiment of this application;
FIG. 11 is a diagram of still another process in which a terminal device performs channel access and information sending according to an embodiment of this application;
FIG. 12 is a schematic flowchart of a communication method according to an embodiment of this application; and
FIG. 13 is a diagram of yet another process in which a terminal device performs channel access and information sending according to an embodiment of this application.

## DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "include" and "have" and any variants thereof in descriptions of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in embodiments of this application, the words such as "an example" or "for example" are used to represent giving an example, an illustration, or a description. Any embodiment or design solution described as "an example" or "for example" in embodiments of this application should not be explained as being more preferred or having more advantages than another embodiment or design solution. Exactly, use of the words such as "an example" or "for example" is intended to present a relative concept in a specific manner.

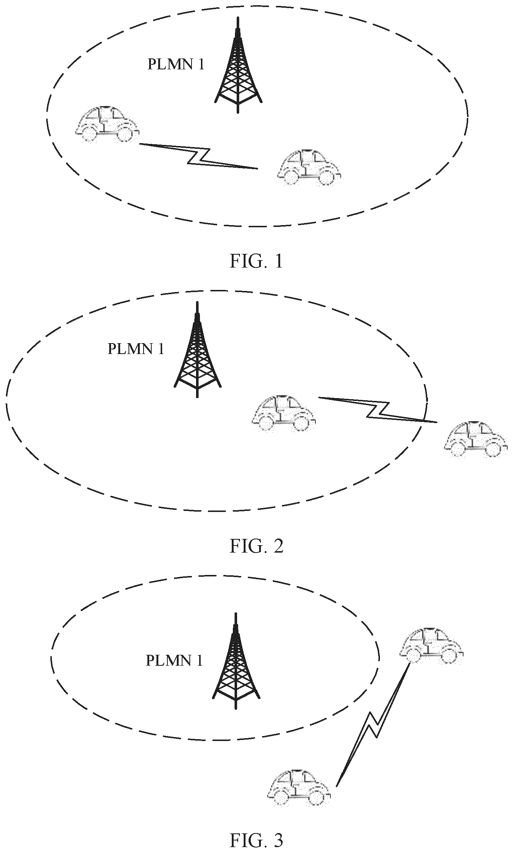

Embodiments of this application are applicable to a system in which terminal devices communicate with each other, such as a vehicle-to-everything (Vehicle-to-everything, V2X) communication system or a device-to-device (device to device, D2D) system. The following uses a V2X communication system as an example to describe a communication system to which embodiments of this application are applicable. Referring to FIG. 1, FIG. 2, and FIG. 3, the communication system includes at least two terminal devices, and two terminal devices can directly communicate with each other through a sidelink (sidelink, SL) (only two terminal devices are shown in each of FIG. 1, FIG. 2, and FIG. 3). Optionally, the communication system further includes an access network device. The terminal device may further communicate with the access network device.

The V2X communication system may have the following communication scenarios: vehicle-to-vehicle (vehicle to vehicle, V2V) communication, vehicle-to-infrastructure (vehicle to infrastructure, V2I) communication, vehicle-to-application server (vehicle to network, V2N) communication, vehicle-to-pedestrian's mobile terminal (vehicle to pedestrian, V2P) communication, and the like. In the V2X communication system, terminal devices directly communicate with each other through a sidelink (sidelink, SL), without a receiving or sending process of an access network device or an uplink or downlink communication link.

The terminal device is mainly configured to receive or send data. Optionally, the terminal device in embodiments of this application may be a device that implements a terminal function or a component (for example, a chip system) in the device. The terminal device includes, for example, but is not limited to, various handheld devices, vehicle-mounted devices, wearable devices, computing devices, or other processing devices connected to a wireless modem that have a wireless communication function. Alternatively, the terminal device may include a subscriber unit (subscriber unit), a cellular phone (cellular phone), a smartphone (smart phone), a wireless data card, a personal digital assistant (personal digital assistant, PDA) computer, a tablet computer, a handheld (handheld) device, a laptop computer (laptop computer), a machine type communication (machine type communication, MTC) terminal (terminal), user equipment (user equipment, UE), a mobile terminal, and the like. For another example, the terminal device may be a component in any one of the foregoing devices (for example, the terminal device may be a chip system in any one of the foregoing devices). In some embodiments of this application, the terminal device may be alternatively referred to as a terminal apparatus or a terminal. This is uniformly described herein and is not described below again.

The access network device in embodiments of this application is an apparatus that provides a wireless communication function. The access network device communicates with the terminal device over an air interface by using one or more cells. The access network device in embodiments of this application may be a device that implements an access network function or a component in the device (for example, a chip system in the access network device). Optionally, the access network device may perform attribute management on the air interface. The access network device may further coordinate attribute management on the air interface. The access network device includes various forms of macro base stations and micro base stations (also referred to as small cells), such as a relay device in a relay station or a chip in a relay device, a transmission reception point (transmission reception point, TRP), an evolved NodeB (evolved NodeB, eNB), a next generation NodeB (g NodeB, gNB), and an evolved NodeB connected to a next generation core network (ng evolved NodeB, ng-eNB). Alternatively, in a distributed base station scenario, the access network device may be a baseband unit (base band unit, BBU) and a remote radio unit (remote radio unit, RRU). In a cloud radio access network (cloud radio access network, CRAN) scenario, the access network device may be a baseband unit pool (BBU pool) and an RRU. In an architecture in which a central unit (central unit) is separated from a distributed unit (distributed unit), the access network device may be a CU and a DU.

Referring to FIG. 1, FIG. 2, and FIG. 3, for two terminal devices that communicate with each other through a sidelink, there may be the following three communication scenarios: First, both the two terminal devices fall within a coverage area of a same public land mobile network (public land mobile network, PLMN) (for example, a PLMN 1), as shown in FIG. 1. Second, only one terminal device falls within a coverage area of a PLMN (for example, a PLMN 1), and the other terminal device falls outside the coverage area of the PLMN (for example, the PLMN 1), as shown in FIG. 2. Third, both the two terminal devices fall outside a coverage area of a PLMN (for example, a PLMN 1), and there is no preconfigured cell identity in an area in which the two terminal devices are located, as shown in FIG. 3. Dashed-line elliptic areas in FIG. 1, FIG. 2, and FIG. 3 each represent the coverage area of the PLMN 1. Because the two terminal devices communicate with each other through the sidelink, the two terminal devices can normally communicate with each other regardless of whether both the two terminal devices fall within a coverage area of a PLMN.

The communication systems shown in FIG. 1, FIG. 2, and FIG. 3 may be used in a long term evolution (long term evolution, LTE) or long term evolution advanced (LTE Advanced, LTE-A) system, or may be used in a 5G network or another network in the future. Certainly, the communication systems may be alternatively used in a system in which LTE and 5G are mixed for networking or another system. This is not specifically limited in this embodiment of this application. In different networks, the access network device and the terminal device in the foregoing communication system may correspond to different names. A person skilled in the art may understand that the names do not constitute limitations on the devices.

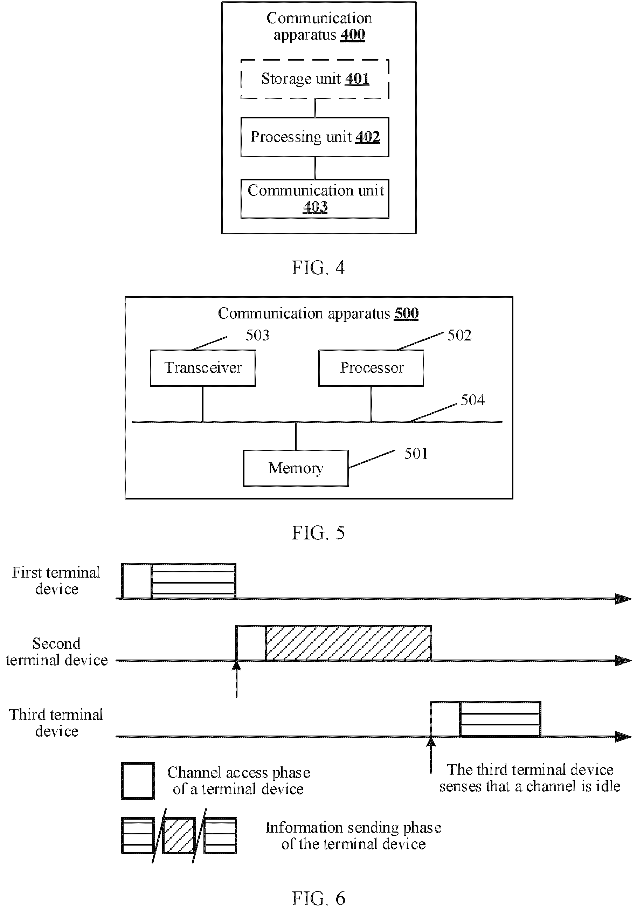

FIG. 4 is a block diagram of a communication apparatus according to an embodiment of this application. The communication apparatus 400 may exist in a form of software, or may be a device or a component (for example, a chip system) in the device. The communication apparatus 400 includes a processing unit 402 and a communication unit 403.

The processing unit 402 is mainly configured to: process a communication protocol and communication data, and control the communication apparatus to, for example, execute a software program, and process data of the software program.

The processing unit 402 may be a processor or a controller, for example, may be a CPU, a general-purpose processor, a DSP, an ASIC, an FPGA or another programmable logic device, a transistor logic device, a hardware component, or any combination thereof. The processing unit 402 may implement or execute various example logical blocks, modules, and circuits described with reference to content disclosed in this application. Alternatively, the processor may be a combination implementing a computing function, for example, a combination including one or more microprocessors, or a combination of a DSP and a microprocessor.

The communication unit 403 is also referred to as a transceiver unit, and may be divided into a sending unit (not shown in FIG. 4) and a receiving unit (not shown in FIG. 4). The sending unit is configured to support the communication apparatus 400 in sending information to another network element. The receiving unit is configured to support the communication apparatus 400 in receiving information from another network element. For example, when the communication apparatus 400 is a terminal device, the communication apparatus 400 may send information to an access network device or another terminal device, or receive information from an access network device or another terminal device through the communication unit 403. When the communication apparatus 400 is an access network device, the communication apparatus 400 may send information to a terminal device, or receive information from a terminal device through the communication unit 403. In addition, when the communication apparatus 400 is an access network device, the communication apparatus 400 further includes a unit that communicates with another access network device or a core network device. Details are not described herein.

The communication unit 403 may be a communication interface, a transceiver, a transceiver circuit, or the like. The communication interface is a general term. In specific implementation, the communication interface may include a plurality of interfaces, for example, may include an interface (for example, a sidelink interface) between terminal devices and/or an air interface between a terminal device and an access network device.

The communication apparatus 400 may further include a storage unit 401. The storage unit is mainly configured to store a software program and data of the communication apparatus 400. The data may include but is not limited to original data, intermediate data, or the like.

The storage unit 401 may be a memory.

The communication apparatus 400 may be a terminal device, or may be an access network device.

When the processing unit 402 is a processor, the communication unit 403 is a communication interface, and the storage unit 401 is a memory, the communication apparatus 400 in this embodiment of this application may be shown in FIG. 5.

Referring to FIG. 5, a communication apparatus 500 includes a processor 502, a transceiver 503, and a memory 501.

The transceiver 503 may be an independently disposed transmitter, and the transmitter may be configured to send information to another device. Alternatively, the transceiver may be an independently disposed receiver, configured to receive information from another device. Alternatively, the transceiver may be a component that integrates information sending and receiving functions. A specific implementation of the transceiver is not limited in this embodiment of this application.

Optionally, the communication apparatus 500 may further include a bus 504. The transceiver 503, the processor 502, and the memory 501 may be connected to each other through the bus 504. The bus 504 may be a peripheral component interconnect (Peripheral Component Interconnect, PCI for short) bus or an extended industry standard architecture (Extended Industry Standard Architecture, EISA for short) bus, or the like. The bus 504 may be classified as an address bus, a data bus, a control bus, or the like. For ease of representation, only one bold line is used for representation in FIG. 5, but it does not indicate that there is only one bus or only one type of bus.

A person skilled in the art can understand that various explanatory logic blocks, modules, circuits, and algorithms described with reference to the various aspects disclosed in this application may be implemented as electronic hardware, instructions that are stored in a memory or another computer-readable medium and that are executed by a processor or another processing device, or a combination thereof. As an example, the device described in this specification may be used in any circuit, hardware component, integrated chip (integrated circuit, IC), or IC chip. The memory disclosed in this application may be any type of memory in any size, and may be configured to store any type of required information. To clearly explain such interchangeability, various explanatory components, blocks, modules, circuits, and steps have been generally described above based on functionality. How to implement such functionality depends on a specific application, a design selection, and/or a design constraint imposed on an entire system. A person skilled in the art may use different manners to implement the described functionality for each particular application, but it should not be considered that such implementation determining goes beyond the protection scope of this application.

For ease of understanding embodiments of this application, the following first briefly describes terms in embodiments of this application. It should be understood that these descriptions are merely intended to facilitate understanding of embodiments of this application, and shall not constitute any limitation on this application.

**Licensed frequency band and unlicensed frequency band:**

In a wireless communication system, frequency bands may be classified into a licensed frequency band and an unlicensed frequency band. Usually, a cellular mobile communication system works on the licensed frequency band. On the licensed frequency band, a terminal device uses a spectrum resource based on scheduling of a central node.

In a 4th generation (4th generation, 4G) LTE system, research work on an unlicensed frequency band of cellular mobile communication is started, and an LTE in unlicensed spectrum (LTE in Unlicensed spectrum, LTE-U) technology or the like is generated.

Because another communication system (for example, a Wi-Fi system) works on the unlicensed frequency band, an LBT channel access mechanism is introduced in LTE-U, so that an LTE-U system and the another communication system working on the unlicensed frequency band can coexist.

Further, in a 5th generation (5th generation, 5G) NR system, research work on an unlicensed frequency band of cellular mobile communication is also introduced, and an NR in unlicensed spectrum (NR in Unlicensed spectrum, NR-U) technology or the like is generated.

On the unlicensed frequency band, a sending terminal device needs to use a spectrum resource in a contention manner. Specifically, the sending terminal device contends for a channel in a listen-before-talk LBT (Listen-before Talk) channel access manner. An LBT mechanism is essentially a channel access rule based on random backoff (random backoff). Before accessing a channel and starting data sending, the sending terminal device needs to sense (sense) whether the channel is idle (idle). If the channel has been kept idle for specific time, the sending terminal device can occupy the channel. If the channel is not idle, the sending terminal device cannot occupy the channel until the channel is restored to idle. Because there are regulation (Regulation) requirements for use of the unlicensed frequency band in various regions of the world, the LBT mechanism is a basic mechanism for using the unlicensed frequency band for communication. Various forms of terminal devices working in different communication protocols can use the unlicensed frequency band only when regulations are met, thereby relatively fairly and efficiently using spectrum resources. In embodiments of this application, sense is also referred to as listen. **LBT:**
Energy detection and signal type detection are usually used in an LBT channel access manner. For example, in 3GPP, energy detection is used in NR-U, and a combination of the two detection methods is used in Wi-Fi. A detection threshold (Energy Detection Threshold) needs to be set for energy detection. When detected energy exceeds the detection threshold, it is determined that a channel is busy, and access to the channel is not allowed. When detected energy is lower than the detection threshold for more than a period of time, access to the channel is allowed. Specifically, LBT may include the following several types:

**Category 1 LBT (Category 1 LBT):** Information is immediately sent after a short switching gap (switching gap). The category 1 LBT, Cat 1 LBT for short, is used by a communication device to immediately send information after a switching gap from a receiving state to a sending state in channel occupancy time (channel occupancy time, COT). The COT is time in which the communication device is allowed to occupy a channel after successfully accessing the channel, and time of the switching gap usually cannot be greater than 16 μs.

**Category 2 LBT (Category 2 LBT):** LBT without random backoff. The category 2 LBT, Cat 2 LBT for short, is used by a communication device to send information without performing random backoff after the communication device senses that a channel is in an idle state for a period of determined time.

**Category 3 LBT (Category 3 LBT):** LBT with random backoff with a contention window (contention window, CW) in a fixed size. The category 3 LBT, Cat 3 LBT for short, is used by a communication device to generate a random number N based on a contention window in a fixed size, and send information after the communication device senses that a channel is in an idle state for a period of time determined based on the random number N. The size of the contention window is related to a minimum value and a maximum value of N.

**Category 4 LBT (Category 4 LBT):** LBT with random backoff with a contention window in a variable size. The category 4 LBT, Cat 4 LBT for short, is used by a communication device to generate a random number N based on a contention window in a variable size, and send information after the communication device senses that a channel is in an idle state for a period of time determined based on the random number N. The size of the contention window is related to a minimum value and a maximum value of N, and the communication device can change the size of the contention window.

A communication device in an NR-U system (NR-U device for short) complies with a 3GPP protocol, and uses LBT as a channel access mechanism. Specifically, the NR-U device uses the following several types of LBT:

**Type 1 LBT**: Cat 4 LBT. The NR-U device can access a channel and send information only after performing random backoff.

Specifically, the NR-U device (including an access network device and/or a terminal device) can send information after sensing, in sensing time (referred to as sensing slot duration (sensing slot duration) in this embodiment of this application) of defer duration (defer sensing, denoted as $T_d$), that a channel is idle, and after a counter $N$ is zero in the following step 4. Specifically, according to the following steps, the channel is sensed to obtain additional sensing slot duration to adjust the counter $N$:

Step 1. Set $N = N_{init}$, where $N_{init}$ is a random number evenly distributed between 0 and a contention window size $CW_p$ corresponding to a channel access priority class (channel access priority class, CAPC) p, and perform step 4.

Step 2. If $N > 0$ and the NR-U device (the access network device and/or the terminal device) chooses to decrease the counter progressively, set $N = N - 1$.

Step 3. Sense the channel based on a time granularity of a sensing time unit (referred to as a sensing slot $T_{sl}$ (it is assumed that $T_{sl}$=9 $\mu s$ in this embodiment of this application), but not limited in this embodiment of this application); and if the channel is idle at the sensing time granularity, go to step 4; otherwise, go to step 5.

Step 4. If $N = 0$, stop sensing the channel; otherwise, perform step 2.

Step 5. Continue sensing the channel, until it is sensed, in one $T_{sl}$ in other $T_d$, that the channel is busy, or it is sensed that the channel is detected as idle in all sensing slots $T_{sl}$ in other $T_d$.

Step 6. If the channel is detected as idle in all the sensing slots $T_{sl}$ in the other $T_d$, perform step 4; otherwise, perform step 5.

$T_d$ includes duration $T_f$ (it is assumed that $T_f$ = 16 $\mu s$, but this is not limited in this embodiment of this application) and $m_p$ continuous $T_{sl}$ following the duration $T_f$, $CW_{min,p} \leq CW_p \leq CW_{max,p}$, $CW_{min,p}$ is a minimum contention window size corresponding to the channel access priority class p, and $CW_{max, p}$ is a maximum contention window size corresponding to the channel access priority class p.

The NR-U device selects $CW_{min,p}$ and $CW_{max,p}$ before step 1. $m_p$, $CW_{min,p}$, and $CW_{max,p}$ are associated with a channel access priority class p of the NR-U device. Specifically, for a downlink CAPC, an association relationship between a channel access priority class p of the access network device, $m_p$, $CW_{min,p}$, $CW_{max,p}$, and $T_{mcot,p}$ is described in Table 1. For an uplink CAPC, an association relationship between a channel access priority class p of the terminal device, $m_p$, $CW_{min,p}$, $CW_{max,p}$, and $T_{mcot,p}$ is shown in Table 2.

**Table 1 Downlink (downlink, DL) CAPC**

| Channel access priority class ($p$) | $m_p$ | $CW_{min,p}$ | $CW_{max,p}$ | $T_{mcot,p}$ | Allowed $CW_p$ |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 ms or 10 ms | {15, 31, 63} |
| 4 | 7 | 15 | 1023 | 8 ms or 10 ms | {15, 31, 63, 127, 255, 511, 1023} |

**Table 2 UL CAPC**

| Channel access priority class ($p$) | $m_p$ | $CW_{min,p}$ | $CW_{max,p}$ | $T_{mcot,p}$ | Allowed $CW_p$ |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

$T_{mcot,p}$ is a maximum COT value corresponding to the channel access priority class p, and is usually specified by a law and regulation. COT in which the NR-U device (the access network device and/or the terminal device) sends information on the channel cannot exceed $T_{mcot,p}$. Allowed $CW_p$ represents a possible contention window value corresponding to the channel access priority class.

The NR-U device maintains the contention window size $CW_p$, and adjusts a value of $CW_p$ according to the following steps before step 1:

Step a. For each channel access priority class p $\in$ {1, 2, 3, 4}, set $CW_p = CW_{min,p}$.

Step b. In a HARQ-ACK feedback value corresponding to information sent by the NR-U device in a reference subframe $k$, if at least Z=80% is determined as a NACK, increase a value of $CW_p$ corresponding to each channel access priority class p $\in$ {1, 2, 3, 4} to a next higher allowed value, and continue ACK/NACK determining in step b; otherwise, perform step a of setting $CW_p = CW_{min,p}$. The reference subframe $k$ is a start subframe of latest transmission performed by the NR-U device on the channel.

<u>Type 2A LBT:</u> Cat 2 LBT with a gap of 25 $\mu$s. After sensing that a channel is idle for 25 $\mu$s, the NR-U device can access the channel and send information.

<u>Type 2B LBT:</u> Cat 2 LBT with a gap of 16 $\mu$s. After sensing that a channel is idle for 16 $\mu$s, the NR-U device can access the channel and send information.

<u>Type 2C LBT:</u> Cat 1 LBT with a gap of at most 16 $\mu$s. The NR-U device does not need to sense a channel, and can directly access the channel and send information after a switching gap of at most 16 $\mu$s in COT.

It may be understood that the sending information and the receiving information in this application may be alternatively replaced with sending data and receiving data. For example, sending first information may be replaced with sending first data, and receiving first information may be replaced with receiving first data. Unless otherwise specified, the sending information and the sending data can be interchanged, and the receiving information and the receiving data can be interchanged.

**Type of a device that performs LBT:**

Types of devices that perform LBT can be classified into load based equipment (Load Based Equipment, LBE) and frame based equipment (Frame Based Equipment, FBE).

The LBE may perform channel sensing and contention access at any time point without considering a frame boundary. For example, a Wi-Fi device may be LBE. As shown in FIG. 6, after sensing that a channel is idle, a first terminal device (a Wi-Fi device 1) performs channel contention access, and occupies the channel for a period of time to send information. After the first terminal device finishes channel occupation, a second terminal device (a Wi-Fi device 2) can start channel contention access when sensing, at any moment, that the channel is idle. Behavior of a third terminal device (a Wi-Fi device 3) is similar to that of the second terminal device. Different terminal devices (Wi-Fi devices) may take same or different time to perform channel access (channel contention). FIG. 6 provides only an example.

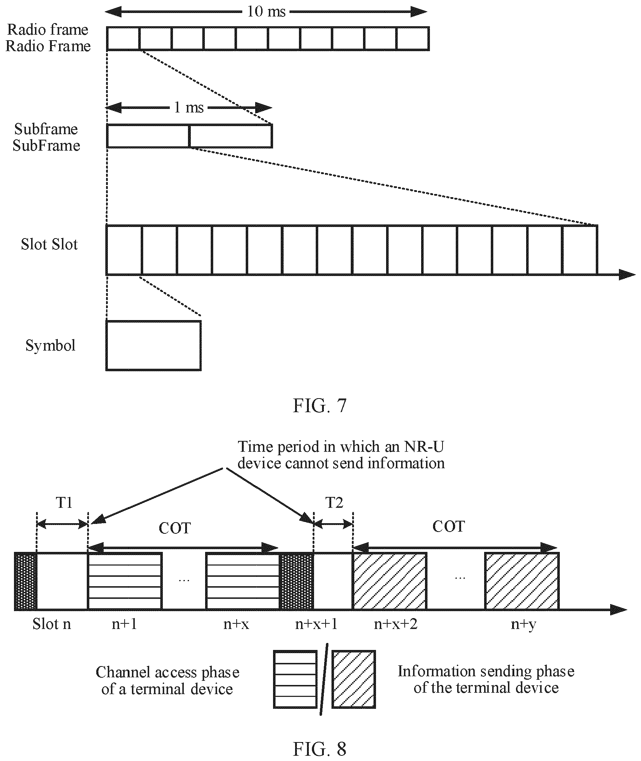

Corresponding to the LBE, the FBE is allowed to obtain COT through channel contention access only on a frame boundary synchronized in a system. Herein, "frame" represents a fixed frame period (Fixed Frame Period, FFP). In an NR-U system, a value of the FFP is configured by using radio resource control (Radio Resource Control, RRC) signaling. For example, the value of the FFP is 1 ms, 2 ms, 2.5 ms, 4 ms, 5 ms, or 10 ms, and can divide duration of two radio frames, namely, 20 ms. Specifically, an NR-U device may be FBE. A frame structure in the NR-U system is shown in FIG. 7. Duration corresponding to a radio frame (radio frame) is 10 ms. One radio frame includes 10 subframes (subframe), and a length of one subframe is 1 ms. One subframe may include different quantities of slots (slot) based on different subcarrier spacings (subcarrier space, SCS). For example, when an SCS is 15 kHz, one subframe includes one slot. When an SCS is 30 kHz, one subframe may include two slots. In other words, when a subcarrier spacing is X kHz, one subframe may include X/15 kHz slots, where X=15 kHz*$2^u$, and u is a natural number. FIG. 7 shows an example in a case in which an SCS is 30 kHz. One slot may include 14 OFDM symbols, corresponding to use of a normal cyclic prefix (Normal CP, NCP), or may include 12 OFDM symbols, corresponding to use of an extended CP (Extended CP, ECP). In addition to the foregoing frame structure, there is also a mini-slot (mini-slot). A quantity of symbols in the mini-slot is very flexible, and a value range of the quantity is {2, 3, 4, ..., 13}.

In the NR-U system, data is transmitted in slots (Slot). To be specific, after performing LBT, the NR-U device cannot immediately send data until a next slot starts. FIG. 8 shows a process in which an NR-U device (for example, a terminal device) performs LBT channel access and information sending.

As shown in FIG. 8, after the terminal device successfully performs LBT in a slot n, time from the end of the slot n (the start of a slot n+1) is T1. The terminal device cannot send information in the time period T1, and can actually occupy a channel resource only when the slot n+1 starts, to send information. Similarly, after the terminal device successfully performs LBT in a slot n+x+1, time from the end of the slot n+x+1 (the start of a slot n+x+2) is T2. The terminal device cannot send information in the time period T2 either, and can actually occupy a channel resource only when the slot n+x+2 starts, to send information. To be specific, compared with the behavior that the Wi-Fi device can start channel access and information sending at any location, because the NR-U device is limited by a design of a frame structure, even if the NR-U device successfully completes LBT, in other words, completes an entire channel sensing process, the NR-U device can send information only when a slot boundary is reached.

**Device-to-device (device-to-device, D2D) communication:**

With an increasing quantity of communication scenarios, a D2D technology has developed rapidly in recent years because of an advantage that direct communication can be performed without a network infrastructure. Application of the D2D technology can alleviate load of a cellular network, reduce battery power consumption of a terminal device, and improve a data rate, and can meet a requirement of a proximity service.

D2D communication: a technology of direct communication between a plurality of terminal devices. In a 3GPP system, from a perspective of an air interface (air interface), an air interface for direct communication between terminal devices is defined as PC5. Therefore, D2D communication may also be referred to as PC5 communication. In addition, from a perspective of a link, a link for direct communication between terminal devices is defined as an SL. Therefore, D2D communication may also be referred to as SL communication.

The D2D communication may be widely applied to a plurality of scenarios, and a typical application scenario is, for example, a vehicle-to-everything (vehicle-to-everything, V2X) scenario, or a scenario of communication between intelligent terminals. V2X may include vehicle to vehicle (vehicle to vehicle, V2V) communication, vehicle to pedestrian (vehicle to pedestrian, V2P) communication, vehicle to infrastructure (vehicle to infrastructure, V2I) communication, vehicle to network (vehicle to network, V2N) communication, and the like. Communication between intelligent terminals may include communication between a mobile phone and a wearable device, communication between an augmented reality (augmented reality, AR)/virtual reality (virtual reality, VR) helmet (or glasses) and a smart screen, communication between sensors, and the like.

Usually, a terminal device using the D2D technology is a half-duplex device, to be specific, the terminal device can only be in a sending state or a receiving state at one moment, and has no simultaneous receiving and sending capability.

**Resource sensing of a sidelink SL:**

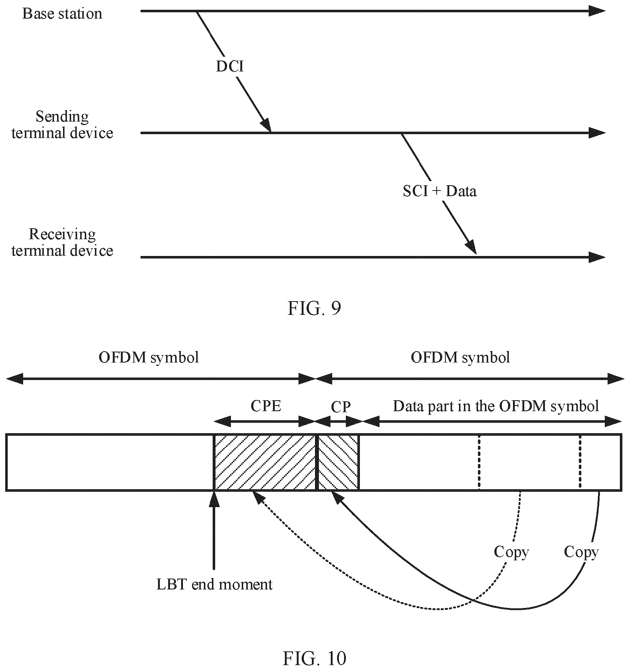

A 3GPP release (Release, Rel) 16 defines two resource allocation modes for an SL: a mode 1 and a mode 2. In the mode 1, an access network device (for example, a base station) schedules or configures resources for a sending terminal device and a receiving terminal device corresponding to the sending terminal device. The sidelink resource allocation mode 1 (mode 1) is usually used for sidelink communication within a coverage area of a base station. Dynamic scheduling in the mode 1 is used as an example. A base station centrally allocates resources based on buffer status report (Buffer Status Report, BSR) statuses of terminal devices. Specifically, the base station notifies a sending terminal device of a time-frequency resource of sidelink data by using downlink control information (downlink control information, DCI), and after receiving the DCI, the sending terminal device sends sidelink control information (sidelink control information, SCI) and the data to a receiving terminal device on the indicated resource, as shown in FIG. 9. In the mode 1, sidelink transmission resources of all terminal devices are centrally scheduled by the base station, so that a collision can be avoided.

In the mode 2, a resource used for SL transmission is determined by a sending terminal device through channel sensing (also referred to as channel listening) and selection, and a core of the mode 2 is a resource reserve process. In this case, the terminal device can work in a scenario without network coverage. The mode 2 supports resource reservation, and resource reserve information is indicated in SCI.

In the mode 2, when data needs to be sent, specifically, when a new transport block (transmission block, TB) is generated, or a previously reserved resource is not suitable for transmission of a newly generated TB in a semi-static allocation solution, a higher layer triggers SL resource selection. When SL resource selection is triggered in a slot *n,* a sending terminal device determines a candidate resource in a resource selection window (resource selection window, RSW) based on resource reserve information that is of another terminal device and that is sensed in a sensing window (sensing window), to transmit a TB. The TB carries data that needs to be sent. For example, assuming that SL resource selection is triggered in a slot *n,* specific steps of resource allocation in the mode 2 are as follows:

Step (1). Determine a resource selection window.

A slot range of the selection window is slot $[n + T_1, n + T_2]$. $T_1$ is determined based on a capability of a terminal device, and $T_2$ is determined based on a packet delay budget (packet delay budget, PDB).

For example, $0 \le T_1 \le T_{proc,1}^{SL}$ and $T_{2\min} \le T_2 \le PDB$. $T_{proc,1}^{SL}$ represents a delay in which the terminal device performs resource selection and data sending, and includes a processing delay in which the terminal device determines the resource selection window. There is a correspondence, shown in Table 3, between a value of $T_{proc,1}^{SL}$ and a subcarrier spacing $\mu_{SL}$ used during transmission.

Table 3

| $\mu_{SL}$ | $T_{proc,1}^{SL}$ **(slot)** |
|---|---|
| 0 | 3 |
| 1 | 5 |
| 2 | 9 |
| 3 | 17 |

$\mu_{SL}$ indicates a subcarrier spacing SCS, and one value of $\mu_{SL}$ indicates one type of SCS. Step (2). Determine a sensing window.

A slot range of the sensing window is $\left[n - T_0, n - T_{proc,0}^{SL}\right]$, $T_0$ is determined based on a higher-layer parameter *sl-SensingWindow,* and $T_{proc,0}^{SL}$ represents a delay in which the terminal device processes a sensing result in the sensing window. There is a correspondence, shown in Table 4, between a value of $T_{proc,0}^{SL}$ and the subcarrier spacing used during transmission.

Table 4

| $\mu_{SL}$ | $T_{proc,0}^{SL}$ **(slot)** |
|---|---|
| 0 | 1 |
| 1 | 1 |
| 2 | 2 |
| 3 | 4 |

In the sensing window, the terminal device continuously senses each slot in a resource pool, decodes SCI on a physical sidelink control channel (physical sidelink control channel, PSCCH) in each slot, and measures reference signal received power (reference signal received power, RSRP) of a demodulation reference signal (demodulation reference signal, DMRS) of the PSCCH and/or a physical sidelink shared channel (physical sidelink shared channel, PSSCH) scheduled by using the PSCCH.

Step (3). Obtain a priority $p_i = prio_{RX}$ indicated in the SCI and a priority $p_j = prio_{TX}$ that is configured by a higher layer and that corresponds to TB transmission of the terminal device, and determine an RSRP threshold $Th(p_i, p_j)$ related to $p_i$ and $p_j$. It may be understood that the priority indicated in the SCI may be a channel access priority class, and/or a service priority or a data priority of to-be-sent data. This is not limited in this application.

Step (4). Determine an initial single-slot candidate resource set $S_A$.

The initial single-slot candidate resource set $S_A$ includes all single-slot candidate resources in the selection window in the SL resource pool. One single-slot candidate resource $R_{x,y}$ is defined as $L_{subCH}$ continuous subchannels starting from a subchannel $x$ in one slot $t_y^{\prime SL}$. A total quantity of single-slot candidate resources in the initial single-slot candidate resource set $S_A$ is denoted as $M_{total}$.

Step (5). For a single-slot candidate resource $R_{x,y}$ (it is assumed that the single-slot candidate resource is located in a slot $t_y^{\prime SL}$) in the initial single-slot candidate resource set $S_A$, when the following two conditions are both met, exclude the single-slot candidate resource from $S_A$:

(a) The terminal device does not perform channel sensing in a slot $t_m^{\prime SL}$ (for example, the terminal device is in a sending state in the slot). $t_m^{\prime SL}$ is a slot in the sensing window.

(b) For any resource reserve interval value $P_{rsvp}$ allowed by a higher-layer parameter *sl-ResourceReservePeriodList,* slots $t_{m+q \times P_{rsvp}}^{\prime SL}$ and $t_{y+q \times P_{rsvp\_RX}^{\prime}}^{\prime SL}$ overlap. $q$ is a positive integer that ensures that the slot $t_{m+q \times P_{rsvp}}^{\prime SL}$ is located in the selection window $[n + T_1, n + T_2]$, and $0 \leq j \leq C_{resel} - 1$.

Step (5a). If a quantity of single-slot candidate resources remaining in $S_A$ after step (5) is less than $X\% \cdot M_{total}$, perform step (4) again. After step (4) is performed again, step (6) may be performed, and the exclusion in step (5) does not take effect.

Step (6). For a single-slot candidate resource $R_{x,y}$ (it is assumed that the single-slot candidate resource is located in a slot $t'^{SL}_y$ ) in the initial single-slot candidate resource set $S_A$, when the following three conditions are all met, exclude the single-slot candidate resource from $S_A$:

(a) The terminal device decodes, in a slot $t'^{SL}_m$ , SCI carried on a PSCCH. A value indicated by a resource reserve period field in the SCI is $P_{rsvp\_RX}$ (in a unit of ms), and $P_{rsvp\_RX}$ is converted into a period $P'_{rsvp\_RX}$ in a unit of a slot. In addition, a priority indicated by a priority *(Priority)* field in a 1st-stage SCI is $prio_{RX}$. A subchannel resource occupied in frequency domain by the PSCCH and a PSSCH scheduled by using the PSCCH is $R_{RX}$.

(b) RSRP of a DMRS of the PSCCH or RSRP of a DMRS of the PSSCH scheduled by using the PSCCH is higher than the RSRP threshold determined in step (3).

(c) A reserved resource indicated by the SCI is located in the resource selection window. To be specific, the resource $R_{RX}$ in a slot $t'^{SL}_{m+q\times P'_{rsvp\_RX}}$ and $R_{x,y+j\times P'_{rsvp\_TX}}$ overlap. $q$ is a positive integer that ensures that the slot $t'^{SL}_{m+q\times P'_{rsvp\_RX}}$ is located in the selection window $[n + T_1, n + T_2]$. The resource $R_{RX}$ in the slot $t'^{SL}_{m+q\times P'_{rsvp\_RX}}$ is a period resource reserved by another terminal device. $R_{x,y+j\times P'_{rsvp\_TX}}$ represents a resource obtained after the single-slot candidate resource $R_{x,y}$ is delayed based on the period $P'_{rsvp\_TX}$ , and $0 \leq j \leq C_{resel} - 1$.

It may be understood that, for a slot $t'^{SL}_m$ in the sensing window, the terminal device needs to perform only one of step (5) and step (6). To be specific, if the terminal device does not perform channel sensing in the slot $t'^{SL}_m$ in the sensing window, step (5) is performed; or if the terminal device decodes 1st-stage SCI of a PSCCH in the slot $t'^{SL}_m$ in the sensing window, step (6) is performed.

Step (7). If a quantity of single-slot candidate resources remaining in the initial single-slot candidate resource set $S_A$ is less than $X\% \cdot M_{total}$, increase the RSRP threshold (increased by 3 dB each time) in step (3), and return to step (4) to continue performing the procedure; or if a quantity of single-slot candidate resources remaining in $S_A$ is greater than $X\% \cdot M_{total}$, report $S_A$ to the higher layer.

According to the foregoing steps, after selecting a resource, the terminal device notifies another terminal device of a reserve message by using SCI. In addition, when completing LBT before resource reservation, the terminal device can send information by using a specified time-frequency resource.

**Cyclic prefix extension:**

In an NR-U system, signal receiving and sending need to meet synchronization at an OFDM symbol level, to be specific, information sending starts at a start location of an OFDM symbol, for efficient cellular communication. Therefore, if time at which an NR-U device completes LBT is not the end of a symbol (or the start of a next symbol of the symbol), the NR-U device may send a cyclic prefix extension (Cyclic Prefix Extension, CPE), to occupy a channel from the end of the LBT to the start of the next symbol.

FIG. 10 is a diagram of a CP and a CPE in an NR-U system. As shown in FIG. 10, a trailer segment of a data part in an OFDM symbol is copied as a CP and the CP is added to the front of the OFDM symbol, and the CP and the data part jointly constitute a complete OFDM symbol. When an LBT end moment is not a start moment of an OFDM symbol, an NR-U device further copies a part of data in the OFDM symbol as a CPE, and adds the CPE to front of a CP part in the OFDM symbol or fills the CPE into time from the LBT end moment to the start moment of the OFDM symbol, to occupy a channel resource preempted based on LBT.

Based on a CPE mechanism, the NR-U system can ensure synchronization at an OFDM symbol level.

Due to wide application of SL communication, using an unlicensed frequency band in SL communication is an important evolution direction, and corresponding systems (or protocols or technologies) may be collectively referred to as an SL-U. A communication device working in an SL-U system may be referred to as an SL-U device.

In the SL-U system, the SL-U device also needs to access a channel by using an LBT mechanism, to coexist with a Wi-Fi system. Sending information by the SL-U device is also limited by a frame structure. As shown in FIG. 8, even if a terminal device successfully completes LBT, the terminal device cannot send information until a next slot starts. However, in a period of time from the completion of the LBT to the start of the next slot, the SL-U device cannot send information, in other words, does not actually occupy a channel resource, but in this case, a device in another communication system such as a Wi-Fi system may also complete LBT before the next slot starts, and immediately send information. Consequently, the SL-U device fails in channel preemption, and therefore cannot start information sending in the next slot. This affects communication performance such as a data transmission delay and a rate, and affects QoS of a service.

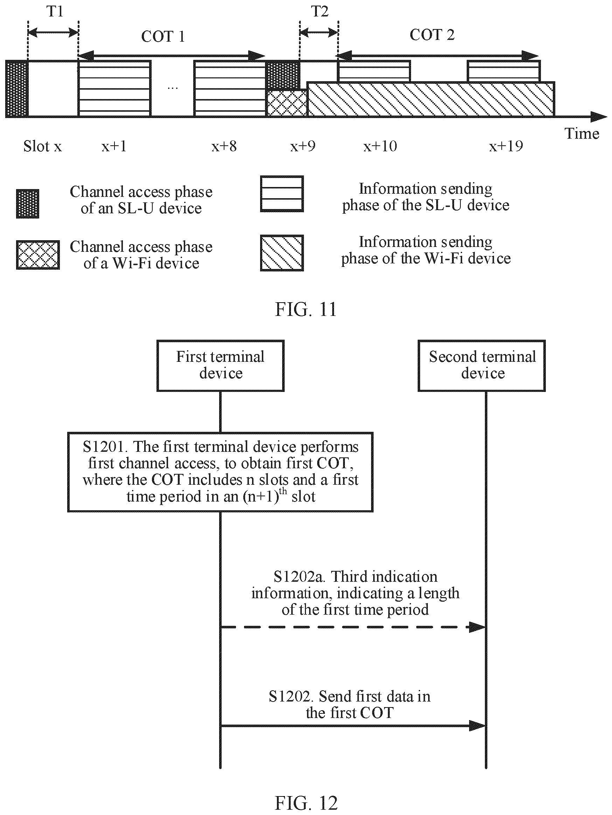

For example, as shown in FIG. 11, an SL-U device (referred to as a first terminal device) determines that there is to-be-sent data, and it is assumed that a channel access priority class of the SL-U device is 1, LBT is successfully completed in a slot x, obtained channel occupancy time COT 1 of a channel resource is eight slots (a slot x+1 to a slot x+8), and information is sent to another SL-U device (referred to as a second terminal device) during the COT 1. T1 is time of the SL-U device from the completion of the LBT to the end of the slot x. As described above, within the time T1, the SL-U device cannot send information to occupy the channel resource. The SL-U device releases the channel resource after the COT 1 ends (the slot x+8 ends). In this case, if the SL-U device still has to-be-sent data, the SL-U device detects, at a start moment of a slot x+9, that a channel is idle, starts Type 1 LBT, selects a random backoff number N (for example, N=9), completes backoff after 81 $\mu$s ($N* T_{sl}$=9*9 $\mu$s), and obtains COT 2 to send information. The COT 2 includes 10 slots in total: a slot x+10 to a slot x+19. Because the SL-U device can start information sending only in a next slot, the SL-U device waits and continuously senses the channel during T2. T2 is time of the SL-U device from the completion of the LBT to the end of the slot x+9. Similarly, a Wi-Fi device detects, at a start location of the slot x+9, that the channel is idle, performs LBT, and determines, after 225 $\mu$s (backoff number N=25, and 25*9 $\mu$s=225 $\mu$s), that the channel is idle, and therefore immediately sends information. In this case, the Wi-Fi device blocks the first terminal device. Consequently, the first terminal device cannot send data in the slots x+10 to x+19. Therefore, a transmission delay of the to-be-sent data of the first terminal device is affected, and QoS of a service of the first terminal device is affected.

Still based on the example in FIG. 11, in another considered scenario, a first terminal device completes LBT in a slot x, and releases a channel resource after completing data transmission in COT 1 (a slot x+1 to a slot x+8). Another SL-U device (referred to as a third terminal device) working in a mode 2 reserves a channel resource of a slot x+9 to a slot x+19. Therefore, the third terminal device detects, at a start moment of the slot x+9, that a channel is idle, and starts Type 1 LBT. Because the third terminal device can start information sending only in a next slot, the third terminal device waits and continuously senses the channel during T2. T2 is time of the third terminal device from completion of the LBT to the end of the slot x+9. Similarly, a Wi-Fi device detects, at a start location of the slot x+9, that the channel is idle, and immediately sends information after successfully completing LBT. In this case, the Wi-Fi device blocks the third terminal device. Consequently, the third terminal device cannot send data in slots x+10 to x+19. Therefore, a transmission delay of to-be-sent data of the third terminal device is affected, and QoS of a service of the third terminal device is affected.

Alternatively, the third terminal device reserves a resource of the slot x+9, but the first terminal device is sending data in the slot x+8 (the slot x+8 belongs to the first COT of the first terminal device). Consequently, the third terminal device cannot complete LBT before the slot x+9, and cannot transmit data by using the reserved slot x+9. Similarly, a transmission delay of to-be-sent data of the third terminal device is affected, and QoS of a service of the third terminal device is affected.

In view of this, embodiments of this application provide a communication method. The communication method in embodiments of this application may be applied to the communication system in FIG. 1, FIG. 2, or FIG. 3. In the communication method, a first terminal device (for example, an SU-L device) performs first channel access, to obtain first COT of a first channel resource, where the first COT includes n first time units and a first time period in an (n+1)th first time unit, the first COT is continuous in time, a length of the first time period is less than a length of the first time unit, the length of the first time period may be determined based on a channel access priority class p, and n is an integer greater than or equal to 0; and the first terminal device sends data to a second terminal device in the first COT by using the first channel resource. In the communication method, an end moment of the first COT is set before the end of a first time unit, in other words, the channel resource is released before the end of the first time unit. According to the method, before a next first time unit starts, the first terminal device and the third terminal device in the several scenarios shown in FIG. 11 can detect that a channel is idle, and complete LBT, to reduce impact of the Wi-Fi device on the first terminal device or the third terminal device, and increase a probability of starting data sending in the next first time unit, thereby reducing a data transmission delay, and meeting a QoS requirement of a service as much as possible.

With reference to the drawings, the following describes in detail the method provided in embodiments of this application. In embodiments of this application, an example in which the first terminal device is a sending SU-L device, the second terminal device is a receiving SU-L device, and the third terminal device is another SU-L device is used for description. It is worth noting that, although the SU-L device is used as an example for description in embodiments of this application, embodiments of this application are not limited thereto. The method provided in embodiments of this application may be applied to any device that uses an unlicensed spectrum and can implement device-to-device communication.

In addition, in embodiments of this application, an example in which the first time unit is a slot is used for description. It is worth noting that, although the slot is used as an example for description in embodiments of this application, embodiments of this application has no limitation that the first time unit is necessarily a slot, and the first time unit may be alternatively another term, for example, a subframe or a mini-slot (Mini Slot).

As shown in FIG. 12, a communication method provided in an embodiment of this application includes the following steps.

S1201. A first terminal device performs first channel access, to obtain first COT, where the first COT includes n slots and a first time period in an $(n+1)^{th}$ slot.

Specifically, when having to-be-sent data, the first terminal device performs the first channel access. Specifically, a manner of the first channel access is LBT. A type of the LBT may be the foregoing Type 1 LBT, or may be another type of LBT. This is not limited in this embodiment of this application.

The first terminal device performs the first channel access to send data by using a first channel resource.

The first COT is continuous in time, a length of the first time period is less than a length of one slot, and n is an integer greater than or equal to 0, in other words, an end moment of the first COT is an end moment of the first time period. When n>0, the first COT includes n continuous slots and a partial time period (the first time period) in the following $(n+1)^{th}$ slot. When n=0, the first COT includes only the first time period. In this case, n=0.

It may be understood that another expression of the first COT is as follows: The first COT includes n+1 continuous time units, where an $(n+1)^{th}$ time unit includes a first time period, a time period, in the $(n+1)^{th}$ time unit, other than the first time period does not belong to the first COT, and n is greater than or equal to 0. Alternatively, the first COT is expressed as follows: The first COT includes m continuous time units, an $m^{th}$ time unit includes a first time period, and a time period, in the $m^{th}$ time unit, other than the first time period does not belong to the first COT, and m is greater than 0. In this case, it is equivalent that m=n+1. An expression of the first COT is not specifically limited in this application.

It may be understood that when a moment at which the first terminal device completes the first channel access is the same as a start moment of the 1st slot in the n slots (n>0) or the same as a start moment of the first time period (n=0), it may be considered that the first COT includes the n slots and the first time period in the $(n+1)^{th}$ slot. When a moment at which the first terminal device completes the first channel access is earlier than a start moment of the 1st slot in the n slots (n>0) or earlier than a start moment of the first time period (n=0), the first COT further includes time $\Delta\tau$ from the moment at which the first terminal device completes the first channel access to the start moment of the 1st slot or further includes time $\Delta\tau$ from the moment at which the first terminal device completes the first channel access to the start moment of the first time period. In this case, it may be considered that the first COT includes $\Delta\tau$, the n slots, and the first time period in the $(n+1)^{th}$ slot.

It may be understood that the first time period may be expressed as a quantity of included OFDM symbols, for example, the first time period includes 11 OFDM symbols; or may be expressed as an absolute time length, for example, the first time period includes 677 $\mu$s. This is not limited in this application.

The length of the first time period is determined based on a channel access priority p. Specifically, L may be determined based on the following parameters:

a contention window size $CW_p$ corresponding to the channel access priority p and/or a quantity $m_p$ of continuous sensing time units corresponding to p.

A specific determining manner is specifically described below.

S1202. The first terminal device sends first data (or first information) in the first COT.

Specifically, the first terminal device sends the first data in the first COT by using the first channel resource.

Further, after the first COT ends, the first terminal device immediately stops data sending, and releases the first channel resource.

When the communication apparatus 400 is used as the first terminal device, steps S1201 and S1203 may be implemented by the processor 402 of the communication apparatus 400 by controlling the transceiver 403, and step S1202 may be implemented by the processor 402.

When the communication apparatus 500 is used as the first terminal device, steps S1201 and S1203 may be implemented by the processor 502 of the communication apparatus 500 by controlling the transceiver 503, and step S1202 may be implemented by the processor 502.

Further, optionally, when the first terminal device determines that there is still to-be-transmitted data after the $(n+1)^{th}$ slot, or determines to send data in an $(n+2)^{th}$ slot, the first terminal device starts channel access (LBT) (referred to as second channel access in this embodiment of this application) again after the first COT ends, to obtain COT (referred to as second COT in this embodiment of this application) of a second channel resource.

Further, optionally, after performing the second channel access, the first terminal device obtains the second COT of the second channel resource. For an expression of the second COT, refer to the expression of the first COT. For example, the second COT may include a partial time period in the $(n+2)^{th}$ slot; m continuous slots including the $(n+2)^{th}$ slot, and a partial time period in an (n+2+m)th slot; or k continuous slots including the (n+2)th slot, where m and k are positive integers. This is not limited in this embodiment of this application.

It may be understood that when a completion moment of the second channel access is earlier than a start moment of the second COT (an end moment of the (n+1)th slot, namely, a start moment of the (n+2)th slot), the second COT may further include time (referred to as $\Delta\tau$ in this application) of the first terminal device from the completion moment of the second LBT to the start moment of the second COT.

Further, during $\Delta\tau$, the first terminal device may send channel occupation information (referred to as a first signal in this application), to occupy the second channel resource, to send data in the second COT. It may be understood that the first terminal device may alternatively not perform an operation during $\Delta\tau$, and starts data sending at a start moment of the 1st slot included in the second COT.

In this embodiment of this application, the end time of the first COT (the end moment of the first time period) is advanced to be earlier than end time of the last slot. Therefore, when the first terminal device still has to-be-sent data (for example, the first terminal device determines to send data in the (n+2)th slot), the first terminal device can perform channel access again in advance (for example, before the (n+2)th slot starts), so that the first terminal device starts data sending in the (n+2)th slot after obtaining a channel resource through contention. Alternatively, a third terminal device can perform LBT in advance (for example, before the (n+2)th slot starts), so that the third terminal device starts data sending in the (n+2)th slot after obtaining a channel resource through contention. The third terminal device is a terminal device that reserves a resource of the (n+2)th slot, and the third terminal device works in a mode 2. Alternatively, the third terminal device is a target terminal device with which the first terminal device shares the resource of the (n+2)th slot in maximum COT preempted by the first terminal device through the first channel access. In other words, in this case, the first terminal device shares the channel resource of the (n+2)th slot with the third terminal device. Therefore, data of the first terminal device or the third terminal device can be sent in time after a channel resource is preempted, thereby reducing a data transmission delay caused by blocking by a Wi-Fi device, and ensuring a QoS requirement of a service of the first terminal device or the third terminal device.

With reference to the drawings, the following describes in detail a method for determining or obtaining the length of the first time period in the foregoing embodiment. It may be understood that the method may also be referred to as a method for determining or obtaining a length of the first COT in the foregoing embodiment.

Specifically, when a first condition is met, the first terminal device obtains the first COT. Alternatively, the length of the first COT is associated with the first condition. The first condition may include at least one of the following:

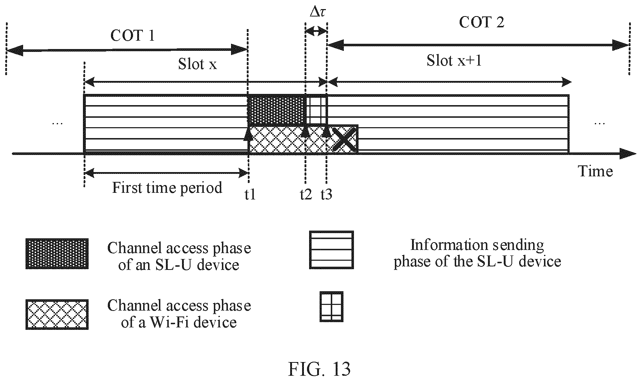

Condition 1: The first terminal device determines that there is still to-be-transmitted data (referred to as second data) after the (n+1)th slot (for example, in a slot x+1 in FIG. 13); or the first terminal device determines to send the second data in the (n+2)th slot.

Condition 2: The first terminal device receives first indication information, where the first indication information indicates that at least one third terminal device reserves the resource of the (n+2)th slot (for example, a slot x+1 in FIG. 13), and a channel access priority class of the at least one third terminal device is higher than a channel access priority class of the first terminal device.

Condition 3: The first terminal device receives second indication information from an access network device, where the second indication information indicates the length L of the first time period, or indicate the length of the first COT.

Condition 4: The first terminal device receives first indication information, where the first indication information indicates that at least one third terminal device reserves the resource of the (n+2)th slot (for example, a slot x+1 in FIG. 13), and a data priority of the at least one third terminal device is higher than a data priority of the first terminal device.

In the condition 1, an occasion at which the first terminal device determines that there is still to-be-transmitted data after the (n+1)th slot may be any moment before the (n+1)th slot, for example, before the 1st slot starts, after the first channel access is completed, or in an ith slot, where i<n. It may be understood that the first terminal device needs to reserve sufficient processing time to prepare for data transmission (for example, data encapsulation and baseband processing) in the first time period in the (n+1)th slot. This is not limited in this application.

With reference to FIG. 13, the following describes determining, by the first terminal device, the length of the first time period, or determining the length of the first COT in the condition 1.

Specifically, if the first terminal device determines that there is to-be-transmitted data and needs to continue to obtain the second COT to send the data, the first terminal device (an SU-L device in FIG. 13) may determine the length of the first time period or determine the length of the first COT based on a channel access priority class service priority p of the first terminal device, or determine, based on p, how much time (for example, how many OFDM symbols) in the (n+1)th slot needs to be reserved for the second channel access (for example, Type 1 LBT).

For brevity of description, the (n+1)th slot (for example, a slot x in FIG. 13) of the first COT is referred to as a first slot, and a next slot, namely, the (n+2)th slot (for example, the slot x+1 in FIG. 13), adjacent to the (n+1)th slot is referred to as a second slot.

The length L of the first time period may meet the following formula:

$$L = N - ceil\left(\left(CW_p \times T_{sl} + T_d\right)/t_{symbol}\right)$$

, where L represents a quantity of orthogonal frequency division multiplexing OFDM symbols, N represents a quantity of OFDM symbols included in one slot, ceil represents rounding up, $T_{sl}$ is a minimum sensing granularity at which the first terminal device performs channel access LBT, $T_d$ is duration in which the first terminal device continuously senses a channel before sending information, $T_d$ includes duration $T_f$ and $m_p\ T_{sl}$, $t_{symbol}$ is duration of one OFDM symbol, and p is the channel access priority class of the first terminal device. It may be understood that, $t_{symbol}$ is related to an SCS. An NCP is used as an example. When $t_{symbol} = \frac{1\ ms}{14*2^u}$, u is a positive integer. When u=0, corresponding SCS=15 kHz, and corresponding $t_{symbol}$ = 1 $ms$/14; when u=1, corresponding SCS=15 kHz*$2^1$=30 kHz, and corresponding $t_{symbol} = \frac{1\ ms}{2}/14 = 0.5\ ms/$ 14; and so on.

The first terminal device may obtain the length L of the first time period according to the foregoing formula, to send data in the first L symbols in the (n+1)$^{th}$ slot. The first terminal device does not send data in following N-L symbols.

In another implementation, L may meet the following formula:

$$L = N - ceil\left(\left(CW_p \times T_{sl} + 2 \times T_d\right)/t_{symbol}\right)$$

Specifically, the first terminal device needs to perform sensing in duration $T_d$ at a channel access start location. When N is backed off to 0 in channel access LBT, because the first terminal device does not immediately send information, the first terminal device needs to perform sensing in other duration $T_d$.

It is worth noting that, according to an NR-U design, L usually cannot be less than seven OFDM symbols. However, this is not limited in this application.

When the first terminal device determines L, there are two cases. If the first terminal device knows a contention window $CW_{fix}$ of the second channel access, CW=$CW_{fix}$. If the first terminal device does not know $CW_{fix}$, the first terminal device selects a maximum contention window $CW_{max,p}$ corresponding to the channel access priority class p, where CW=$CW_{max,p}$.

For example, with reference to the foregoing Table 2, for channel access priority class p=1, $m_p$=2, $CW_{max}$ = 7, and $T_{sl}$ = 9 $\mu$s, it may be learned that, when SCS=15 kHz, L=12 OFDM symbols; when SCS=30 kHz, L=11 OFDM symbols; and when SCS=60 kHz, L=8 OFDM symbols. Similarly, for channel access priority p=2, $m_p$=2, $CW_{max}$ = 15, and $T_{sl}$ = 9 $\mu s$, it may be learned that, when SCS=15 kHz, L=11 OFDM symbols; when SCS=30 kHz, L=9 OFDM symbols; and when SCS=60 kHz, L=4 OFDM symbols, but in this case, because L is less than 7 OFDM symbols, the value is invalid, and therefore it is determined that the first terminal device uses all OFDM symbols in the (n+1)$^{th}$ slot to send information, or it may be considered that, in this case, the length L of the first time period is a special value, namely, all OFDM symbols included in one slot.

According to the foregoing descriptions, it can be learned that a lower value of the channel access priority class p of the first terminal device indicates a higher channel access priority class. On the contrary, a higher value of p indicates a lower channel access priority class. A higher channel access priority class indicates a larger value of L. This brings the following advantage: The first terminal device can more fully use a time domain resource of the first COT to send more data. In addition, when the CAPC of the first terminal device is higher, time for performing channel access is shorter, in other words, the first terminal device can preempt a channel resource (the second COT) in shorter time, so that the first terminal device with the higher CAPC can preempt the second COT in a higher probability to send data, thereby preferentially ensuring a QoS requirement, such as a delay, of data of a higher-priority service.

It should be noted that, in this embodiment of this application, there is a correspondence between a channel access priority class CAPC and a service priority, or the CAPC is determined based on the service priority. Usually, a higher service priority corresponds to a higher CAPC. The service priority is usually represented as a priority of to-be-transmitted data, or is referred to as a data priority. In this embodiment of this application, the CAPC used to obtain L may also be replaced with a service priority. In SCI or MAC CE exchanged between the first terminal device and the access network device, the first terminal device and a second terminal device, or the first terminal device and the third terminal device, a carried CAPC may also be replaced with a service priority, or conversely, a carried service priority may also be replaced with a CAPC. A correspondence between the CAPC of the first terminal device and a service priority may be determined by the terminal device, specified in a protocol, or configured by the access network device.

Further, in FIG. 13, t1 represents the end moment of the first time period or a start moment at which the first terminal device performs the second channel access, t2 represents the moment at which the first terminal device completes the second channel access, t3 represents the start moment of the second COT or a start moment of the 1st slot in the second COT, and $\Delta\tau$ represents time from t2 to t3. For an operation of the first terminal device during $\Delta\tau$, refer to the foregoing descriptions. Details are not described herein again.

Therefore, when the condition 1 is applied to the foregoing embodiment, it may be summarized as follows: When the first terminal device meets the first condition, and the first condition includes the condition 1, the first terminal device performs the first channel access to obtain the first COT, and sends the first data in the first COT; and simultaneously, determines that data sending cannot be completed in the first COT, in other words, determines to send data in the $(n+2)^{th}$ slot, and needs to continue to perform the second channel access to obtain the second COT. In this case, the first terminal device determines, according to the foregoing formula, a length of a time period (the first time period), in the first slot (the last slot in the first COT), used for data transmission. The first terminal device sends the first data in the first COT until releasing the channel resource at the moment t1 shown in FIG. 13. Then, both the first terminal device and a Wi-Fi device sense that the channel is idle, and perform channel access (LBT). If the first terminal device completes the channel access at the moment t2, the first terminal device successfully preempts the second COT. In addition, the Wi-Fi device senses that the channel is busy (occupied), and stops channel access (as shown by "$\times$" in FIG. 13). The second terminal device sends the second data in the second COT.

According to the foregoing method, the first terminal device determines the length of the first time period in the first slot based on the CAPC, so that a specific quantity of symbols can be reserved for performing the second channel access, thereby increasing a probability that the first terminal device continuously obtains COT, and ensuring a QoS requirement of a high-priority service while considering fairness.

It may be understood that, in the condition 1, that the first terminal device determines the length of the first COT may include: the first terminal device first determines maximum COT allowed by a regulation, for example, 2 ms (corresponding to two slots in an SCS of 15 kHz), and then determines, based on the condition 1, to send data in the $3^{rd}$ slot (all the to-be-transmitted data cannot be sent to the second terminal device by using the two slots of the maximum COT). In this case, the first terminal device determines, based on the channel access priority class p, that the length of the first COT is the 1st slot and some symbols in the 2nd slot. Specifically, the first terminal device determines the length of the first COT based on $CW_p$ and/or $m_p$ that correspond/corresponds to the channel access priority class p, as described above. Details are not described herein again.

In the condition 2, after completing the first channel access, the first terminal device determines that a slot in maximum COT allowed by a regulation or a slot (referred to as a second slot herein) after the maximum COT allowed by the regulation is reserved by at least one other terminal device (referred to as third terminal device), and a CAPC of the at least one third terminal device is higher than the CAPC of the first terminal device. In this case, the first terminal device may determine a length of a first time period in a slot (referred to as a first slot) before the second slot, to terminate sending of the first data in advance. In this way, the at least one third terminal device can start channel access LBT after the first time period in the first slot, to preempt a resource of the second slot. Based on this, a QoS requirement, such as a delay, of data of the at least one third terminal device can be ensured in a higher probability.

In the condition 2, an occasion at which the first terminal device determines that the second slot is reserved by the at least one third terminal device may be any moment before the second slot, for example, before the 1st slot in the first COT starts, after the first channel access, or in an $i^{th}$ slot, where i<n. This is not limited in this application.

With reference to FIG. 13, the following describes determining, by the first terminal device, the length of the first time period, or determining the length of the first COT in the condition 2.

Specifically, before the first slot, the first terminal device determines, through channel sensing/listening, that there is reserve information (the first indication information) of another terminal device (including the at least one third terminal device) for the second slot. In this case, the first terminal device compares the CAPC of the first terminal device with a CAPC of the another terminal device that reserves the second slot. If the CAPC of the terminal device that reserves the second slot is higher than the CAPC of the first terminal device, the first terminal device determines to stop sending of the first data after the first time period (for example, a moment t1 in FIG. 13) in the first slot, so that the another terminal device with the higher CAPC performs channel access after the first time period in the first slot, to preempt the resource of the reserved second slot. Correspondingly, the another terminal device (including the at least one third terminal device) and a Wi-Fi device detect, at the moment t1, that a channel is idle, and perform channel access LBT. If a third terminal device completes channel access LBT at a moment t2, the third terminal device successfully preempts the second COT, and sends data in the second slot. In addition, the Wi-Fi device senses that the channel is busy (occupied), and stops channel access LBT. The third terminal device that preempts the second slot sends data in the second COT. In addition, for an operation, of the third terminal device that preempts the resource of the second slot, during $\Delta\tau$, refer to the foregoing descriptions. Details are not described herein again.

Optionally, when the first terminal device has a plurality of services with different service priorities, the CAPC of the first terminal device may be determined based on a highest-priority service. However, this is not limited in this embodiment of this application. Similarly, the CAPC indicated in the first indication information may be related to a highest-priority service of another terminal device. However, this is not limited in this embodiment of this application, either. A service priority or service priorities used to determine the CAPC of the first terminal device may be determined by the terminal device, specified in a protocol, or configured by the access network device.

It may be understood that the CAPC of the first terminal device may be a CAPC corresponding to a service priority of data sent by the first terminal device in the first slot, or a CAPC corresponding to a service priority of data to be sent by the first terminal device in the second slot. This is not limited in this application.

In this case, the length that is of the first time period in the first slot and that is determined by the first terminal device also satisfies the formula in the condition 1. Details are not described again. Different from the condition 1, in the condition 2, p in the formula is a CAPC of a fourth terminal device, and the fourth terminal device belongs to the at least one third terminal device. Correspondingly, the CAPC of the fourth terminal device belongs to the CAPC of the at least one third terminal device. For example, if there is only one third terminal device, p in the formula is a service priority of the third terminal, in other words, the fourth terminal device is the third terminal device. If there are two or more third terminal devices, p in the formula is a service priority of a third terminal device with a lowest priority in the two or more third terminal devices. For example, if p of a third terminal device 1 is equal to 1, and p of a third terminal device 2 is equal to 2, the fourth terminal device is the third terminal device 2, namely, a terminal device with a lower CAPC in the two third terminal devices. Further, the first terminal device determines a value of L by using p=2. Alternatively, the fourth terminal device may be a third terminal device with a highest CAPC in the at least one third terminal device, or may be a CAPC of at least one other third terminal device. This is not limited in this application.

The first indication information in the condition 2 may be from sidelink control information SCI or a media access control control element (MAC CE) of the another terminal device (including the at least one third terminal device) that reserves the second slot. The SCI or the MAC CE includes the CAPC or a service priority of the at least one third terminal device. Specifically, each of other terminal devices sends SCI or a MAC CE, where the SCI or the MAC CE separately carries a CAPC or a service priority of the terminal device. Further, the SCI and the MAC CE may further carry the resource reserve information (for example, a reserved slot) or the like. Further, the SCI may include first-stage SCI and/or second-stage SCI. The first indication information may be included in the first-stage SCI, or may be included in the second-stage SCI. This is not limited in this embodiment of this application.

In the condition 3, the first terminal device works in a mode 1, and the first terminal device reports a channel sensing or listening result to the access network device. Correspondingly, the access network device sends the second indication information to the first terminal device before a first slot, to indicate the length L of the first time period. The first terminal device receives the second indication information from the access network device; and sends data in the first time period in the first COT based on the second indication information, and stops data sending after the first time period. Specifically, the channel sensing result may include that sensing information about a resource reserved by another terminal device, and/or resource use request information of another terminal device, and/or inter-UE coordination (inter-UE coordination, IUC) request information.

The second indication information may be specifically downlink control information DCI that is of an $i^{th}$ slot and that is received from the access network device. The DCI of the $i^{th}$ slot is used to send data in the $i^{th}$ slot in the first COT. The DCI of the $i^{th}$ slot may be received from the access network device in the $i^{th}$ slot, or may be received from the access network device in a slot before the $i^{th}$ slot. This is not limited in this embodiment of this application. The DCI may specifically include at least one of the following information:

$(n-i+1)*N+L$ OFDM symbols; or $n-i+1$ slots and L OFDM symbols, where i is an integer greater than 0 and less than or equal to $n+1$.

Alternatively, the second indication information is DCI received from the access network device, and the DCI is used to send data in the $(n+1)^{th}$ slot in the first COT.

Alternatively, the second indication information is DCI that is of the $(n+1)^{th}$ slot and that is received from the access network device. The DCI of the $(n+1)^{th}$ slot is used to send data in the $(n+1)^{th}$ slot in the first COT. The DCI of the $(n+1)^{th}$ slot may be received from the access network device in the $(n+1)^{th}$ slot, or may be received from the access network device in a slot before the $(n+1)^{th}$ slot. This is not limited in this embodiment of this application. The DCI may specifically include L. Alternatively, the DCI includes a CAPC corresponding to data sent in the $(n+2)^{th}$ slot, and the first terminal device determines L based on the CAPC. In this embodiment of this application, an entity that sends data in the $(n+2)^{th}$ slot included in the DCI is not limited, and may be the first terminal device, or may be another terminal device.

Specifically, when the second indication information is the DCI of the $i^{th}$ slot, the DCI may include a field of M bits, indicating a length of remaining time in the first COT, for example, indicating a quantity of remaining symbols in the first COT. Specifically, when i=1, in other words, for the $1^{st}$ slot in the first COT, the DCI indicates $n*N+L$ symbols; for the $2^{nd}$ slot in the first COT, the DCI indicates $(n-1)*N+L$ symbols; and so on. It is assumed that maximum first COT is 20 ms. For a subcarrier spacing of 30 kHz, 20 ms include 40 slots, and include a total of 40*14=560 symbols in an NCP. In this case, the 560 symbols may be represented by 10 bits, and one value in a field of the 10 bits represents one of the 560 symbols. A symbol quantity corresponding to a specific field value is not specifically limited in this application. Another manner of indicating the length of the remaining time in the first COT is indicating a quantity of remaining slots in the first COT + a quantity (L) of symbols in the last slot. For example, when i=1, in other words, for the $1^{st}$ slot in the first COT, the DCI

# EP 4 546 914 A1

indicates n slots + L symbols; for the 2nd slot in the first COT, the DCI indicates (n-1) slots + L symbols; and so on. It is assumed that maximum first COT is 20 ms. For a subcarrier spacing of 30 kHz, 20 ms includes 40 slots. In an NCP, in this case, the 40 slots may be represented by 6 bits, and then 4 bits are added to represent one of the L symbols. A slot quantity and a symbol quantity that correspond to a specific field value are not specifically limited in this application.

Specifically, when the second indication information is the DCI of the $(n+1)^{th}$ slot, the DCI may include a field of M bits, for example, 3 bits, indicating the length L. For example, 0000 indicates L=7 OFDM symbols, 0001 indicates L=8 symbols, and so on. To be specific, one value in the field corresponds to one length L, and eight valid values may respectively correspond to L=7 symbols to L=14 symbols. For an NCP, a total of eight valid values indicate L=7 to L=14, and for an ECP, a total of seven valid values respectively indicate L=6 to L=12. Another value is invalid or a reserved value. Alternatively, for an NCP, a total of seven valid values indicate L=7 to L=13, and for an ECP, a total of six valid values respectively indicate L=6 to L=11. Another value is invalid or a reserved value. When the DCI does not include the field, it indicates that all symbols in the slot are used to send data. A value of the quantity M of bits occupied by the field and a correspondence between a value of the field and a value of L are not limited in this application.

Alternatively, when the second indication information is the DCI of the $(n+1)^{th}$ slot, the DCI may include a field of M bits, for example, 3 bits, indicating a quantity of symbols in the first slot except the first time period, also referred to as a quantity of reserved symbols, to indicate the length L. For example, 0000 indicates that seven OFDM symbols are reserved (equivalent to L=7), 0001 indicates that six symbols are reserved (equivalent to L=8), and so on. It may be understood that, the directly indicating the length L is essentially the same as the indicating a quantity of reserved symbols. Details are not described.

Further, after the first terminal device obtains the first COT, this embodiment of this application further includes S1202a. Send third indication information to the second terminal device, to indicate the length of the first time period. Correspondingly, the second terminal device may accurately learn of the length L of the first time period based on the third indication information, to correctly receive the data from the first terminal device.

The third indication information may be an SCI or a MAC CE of an $i^{th}$ slot in the first COT, and carries the following information:

(n-i+1)*N+L OFDM symbols; or n-i+1 slots and L OFDM symbols, where i is an integer greater than 0 and less than or equal to n+1; or
the third indication information may be SCI or a MAC CE of the $(n+1)^{th}$ slot in the first COT, and the SCI or the MAC CE includes information about L OFDM symbols.

For example, the first terminal device sends the SCI or the MAC CE to the second terminal device in the $i^{th}$ slot, or sends the SCI or the MAC CE to the second terminal device before the $i^{th}$ slot, to indicate the length L.

For a specific implementation of the third indication information, refer to the implementation of the second indication information. Details are not described herein.

In this embodiment of this application, the first terminal device notifies the second terminal device of L, so that the second terminal device can receive data based on L. This avoids a problem that the second terminal device performs blind detection, thereby reducing signal processing complexity of the second terminal device.

It may be understood that the foregoing embodiment is also applicable to a scenario in which COT is shared, to be specific, the first terminal device sends the third indication information to a fifth terminal device, so that the fifth terminal device accurately obtains the length L when sending information by using the COT, to perform correct data encapsulation and signal processing and sending.

When the foregoing embodiment is used in the scenario in which COT is shared, the first condition further includes determining to share the $(n+2)^{th}$ slot with another terminal device. Specifically, the first terminal device performs the first channel access, to obtain maximum COT specified by a regulation. The maximum COT includes at least n+2 continuous slots (from the 1st slot to the $(n+2)^{th}$ slot). Then, the first terminal device determines to share the $(n+2)^{th}$ slot with another terminal device (for example, the fifth terminal device). In this case, the first terminal device determines the length of the first COT. It may be understood that, if the first terminal device determines to share a middle slot or some middle slots in the maximum COT with the fifth terminal device, the first COT in this application may be time before the slot or slots, in the maximum COT, shared with the fifth terminal device.

Alternatively, even in the scenario in which COT is shared, the first terminal device may also consider that the slot shared with the fifth terminal device is included in the first COT, in other words, the first terminal device may not consider whether COT sharing exists.

It should be noted that the length of the first COT in this application is a length finally used by the first terminal device to send data. For example, in the condition 2, the first terminal device performs the first LBT to obtain a maximum COT length, for example, eight slots, and then determines that the sixth slot is reserved by the at least one third terminal device. In this case, the first terminal device determines that an actual length of the first COT for sending data is the first four slots plus L OFDM symbols in the fifth slot. In other words, the first terminal device sends data in the first four slots and the

21

first L symbols in the fifth slot. An (L+1)$^{th}$ OFDM symbol and a subsequent symbol in the fifth slot are used by the at least one third terminal device to perform channel access.

It may be understood that the methods, the procedures, the operations, or the steps in the designs described in embodiments of this application can be implemented in a one-to-one correspondence manner by using computer software, electronic hardware, or a combination of computer software and electronic hardware. Whether the functions are performed by using hardware or software depends on particular applications and design constraint conditions of the technical solutions. For example, in consideration of aspects such as good universality, low costs, and decoupling between software and hardware, the functions may be implemented by executing program instructions. For another example, in consideration of aspects such as system performance and reliability, the functions may be implemented by using a dedicated circuit. A person of ordinary skill in the art may implement the described functions by using different methods for each particular application. This is not limited herein.

According to the method provided in embodiments of this application, this application further provides a computer program product. The computer program product includes computer program code. When the computer program code is run on a computer, the computer is enabled to perform the method in the foregoing embodiments. Embodiments in this application may also be combined with each other.

According to the method provided in embodiments of this application, this application further provides a computer-readable medium. The computer-readable medium stores program code. When the program code is run on a computer, the computer is enabled to perform the method in the foregoing embodiments.

According to the method provided in embodiments of this application, this application further provides a system, including the foregoing terminal device and network device.

**In** embodiments of this application, it should be noted that the foregoing method embodiments in embodiments of this application may be applied to a processor, or may be implemented by a processor. The processor may be an integrated circuit chip and has a signal processing capability. In an implementation process, the steps in the foregoing method embodiments may be implemented by using an integrated logic circuit of hardware in the processor, or instructions in a form of software. The processor may be a general-purpose processor, a digital signal processor (digital signal processor, DSP), an application-specific integrated circuit (application specific integrated circuit, ASIC), a field programmable gate array (Field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

An embodiment of this application further provides a processor-readable storage medium, including instructions. When the instructions are run on a processor, the foregoing method is implemented. When the processor performs the method in embodiments of this application, a sending action may be that an input/output port of the processor outputs a baseband signal that carries to-be-sent information, and a receiving action may be that the input/output port of the processor receives a baseband signal that carries to-be-received information. It may be understood that the processor-readable storage medium provided in this embodiment of this application may also be a computer-readable storage medium.

An embodiment of this application further provides an apparatus (for example, an integrated circuit, a wireless device, or a circuit module), configured to implement the foregoing method. The apparatus includes a processor and a memory connected to the processor. The memory is configured to store instructions. The processor is configured to read and execute the instructions stored in the memory, to enable the apparatus to perform the foregoing method. The apparatus described in this specification may be an independent device or may be a part of a larger device. The device may be (i) an independent IC; (ii) a set having one or more ICs, where the set may include a memory IC configured to store data and/or instructions; (iii) an RFIC, for example, an RF receiver or an RF transmitter/receiver; (iv) an ASIC, for example, a mobile station modem; (v) a module that can be built into another device; (vi) a receiver, a cellular phone, a wireless device, a handheld machine, or a mobile unit; or (vii) the like.

The method and the apparatus that are provided in embodiments of this application may be applied to a terminal device or an access network device (or a network device) (which may be collectively referred to as a wireless device). The terminal device, the access network device, or the wireless device may include a hardware layer, an operating system layer that runs above the hardware layer, and an application layer that runs above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing by using a process (process), for example, a Linux operating system, a Unix operating system, an Android operating system, an iOS operating system, or a Windows operating system. The application layer includes applications such as Browser, Contacts, word processing software, and instant messaging software. In addition, a specific structure of an entity that performs the method is not limited in embodiments of this application, provided that the entity can perform communication according to the signal transmission method in embodiments of this application by running a program of code recording the method in embodiments of this application. For example, the wireless communication method in embodiments of this application may be performed by a terminal device, an access network device, or a functional module that is in the terminal device or the access network device and that can invoke a program and execute the program.

A person of ordinary skill in the art may be aware that, in combination with the examples described in embodiments disclosed in this specification, units and algorithm steps can be implemented by using electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that the implementation goes beyond the scope of embodiments of this application.

In addition, aspects or features in embodiments of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium accessible by a computer, or a data storage device, for example, a server or a data center, integrating one or more available media. The available medium may be a magnetic medium (for example, a floppy disk, a hard disk, or a magnetic tape), an optical medium (for example, a DVD), a semiconductor medium (for example, a solid state disk Solid State Disk (SSD)), or the like.

In the several embodiments provided in this application, it should be understood that the disclosed system, apparatus, and method may be implemented in other manners. For example, the apparatus embodiments described above are merely examples. For example, the unit division is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, to be specific, may be located in one place, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of embodiments of this application essentially, or the contributing part, or some of the technical solutions may be implemented in a form of a software product. The computer software product is stored in a storage medium, and includes several instructions for instructing a computer device (which may be a personal computer, a server, an access network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application, but the protection scope of embodiments of this application is not limited thereto. Any variation or replacement readily figured out by a person skilled in the art within the technical scope disclosed in embodiments of this application shall fall within the protection scope of embodiments of this application.

**Claims**

1. A communication method, comprising:

   performing, by a first terminal device, first channel access, to obtain first channel occupancy time COT of a first channel resource, wherein the first COT comprises n first time units and a first time period in an (n+1)$^{th}$ first time unit, the first COT is continuous in time, a length L of the first time period is less than a length of the first time unit, and n is an integer greater than or equal to 0; and
   sending, by the first terminal device, first data to a second terminal device in the first COT by using the first channel resource, wherein
   L is determined based on a channel access priority class p.

2. The method according to claim 1, wherein the method further comprises:

   starting, by the first terminal device, second channel access after the first COT ends, to obtain second COT of a second channel resource, wherein the second COT comprises an (n+2)$^{th}$ first time unit; and
   if a start moment of the second COT is earlier than an end moment of the (n+1)$^{th}$ first time unit, sending, by the first terminal device, a first signal from the start moment of the second COT to the end moment of the (n+1)$^{th}$ first time unit.

3. The method according to claim 1 or 2, wherein when a first condition is met, the first terminal device obtains the first COT, wherein the first condition comprises at least one of the following:

   determining, by the first terminal device, to send second data in the (n+2)$^{th}$ first time unit;
   receiving, by the first terminal device, first indication information, wherein the first indication information indicates that at least one third terminal device reserves a resource of the (n+2)$^{th}$ first time unit, and a data priority of the at least one third terminal device is higher than a data priority of the first terminal device; or
   receiving, by the first terminal device, second indication information from an access network device, wherein the second indication information indicates L.

4. The method according to claim 3, wherein p comprises at least one of the following:

   a channel access priority class of the first terminal device; or
   a channel access priority class of a fourth terminal device, wherein the fourth terminal device belongs to the at least one third terminal device.

5. The method according to any one of claims 1 to 3, wherein that L is determined based on a channel access priority class p comprises:
   L is determined based on a contention window size $CW_p$ corresponding to p and a quantity $m_p$ of continuous sensing time units corresponding to p.

6. The method according to claim 5, wherein the first time unit is a slot, L represents a quantity of orthogonal frequency division multiplexing OFDM symbols, one slot comprises N OFDM symbols, and L satisfies the following calculation formula:

$$L = N - ceil\left(\left(CW_p \times T_{sl} + T_d\right)/t_{symbol}\right).$$

, wherein $T_{sl}$ is a sensing time unit and represents a minimum sensing granularity at which the first terminal device performs channel access, $T_d$ is first duration for sensing a channel, $T_d$ comprises duration $T_f$ and $m_p$ $T_{sl}$, $t_{symbol}$ is

duration of one OFDM symbol, and the first duration is defer duration for detecting that the channel is idle in channel sensing.

7. The method according to any one of claims 4 to 6, wherein the channel access priority class of the fourth terminal device is a channel access priority class of a third terminal device with a lowest priority in a channel access priority class of the at least one third terminal device.

8. The method according to any one of claims 4 to 7, wherein the method further comprises:
sending, by the first terminal device, third indication information to the second terminal device, wherein the third indication information indicates L.

9. The method according to any one of claims 4 to 7, wherein the first indication information is sidelink control information SCI or a media access control control element MAC CE from the at least one third terminal device, and the SCI or the MAC CE comprises the channel access priority class of the at least one third terminal device; and

the second indication information is downlink control information DCI of an $i^{th}$ first time unit, and the DCI comprises at least one of the following information:

(n-i+1)*N+L OFDM symbols; or
n-i+1 slots and L OFDM symbols;
or
the second indication information is downlink control information DCI of the $(n+1)^{th}$ first time unit, and the DCI comprises L, wherein
the first time unit is a slot, L represents a quantity of orthogonal frequency division multiplexing OFDM symbols, one slot comprises N OFDM symbols, and i is an integer greater than 0 and less than or equal to n+1.

10. The method according to claim 8, wherein the third indication information is SCI or a MAC CE of an $i^{th}$ first time unit, and the SCI or the MAC CE comprises at least one of the following information:

(n-i+1)*N+L OFDM symbols; or
n-i+1 slots and L OFDM symbols;
or
the third indication information is SCI or a MAC CE of the $(n+1)^{th}$ first time unit, and the SCI or the MAC CE comprises L, wherein
the first time unit is a slot, L represents a quantity of orthogonal frequency division multiplexing OFDM symbols, one slot comprises N OFDM symbols, and i is an integer greater than 0 and less than or equal to n+1.

11. A communication method, comprising:

receiving, by a second terminal device, third indication information from a first terminal device, wherein the third indication information indicates a length L of a first time period, the first time period belongs to first channel occupancy time COT of the first terminal device, the first COT comprises n first time units and the first time period in an $(n+1)^{th}$ first time unit, the first COT is continuous in time, and the length of the first time period is less than a length of the first time unit;
and
receiving, by the second terminal device, data from the first terminal device in the first COT based on the third indication information.

12. The method according to claim 11, wherein the third indication information is SCI or a MAC CE of an $i^{th}$ first time unit, and the SCI or the MAC CE comprises at least one of the following information:

(n-i+1)*N+L OFDM symbols; or
n-i+1 slots and L OFDM symbols;
or
the third indication information is SCI or a MAC CE of the $(n+1)^{th}$ first time unit, and the SCI or the MAC CE comprises L, wherein
the first time unit is a slot, L represents a quantity of orthogonal frequency division multiplexing OFDM symbols, one slot comprises N OFDM symbols, and i is an integer greater than 0 and less than or equal to n+1.

13. A communication apparatus, comprising a processor and a transceiver, wherein

the processor is configured to perform first channel access, to obtain first channel occupancy time COT of a first channel resource, wherein the first COT comprises n first time units and a first time period in an $(n+1)^{th}$ first time unit, the first COT is continuous in time, a length L of the first time period is less than a length of the first time unit, and n is an integer greater than or equal to 0; and the transceiver is configured to send first data to a second terminal device in the first COT by using the first channel resource, wherein
L is determined based on a channel access priority class p.

14. The communication apparatus according to claim 13, wherein

the processor is configured to start second channel access after the first COT ends, to obtain second COT of a second channel resource, wherein the second COT comprises an $(n+2)^{th}$ first time unit; and
if a start moment of the second COT is earlier than an end moment of the $(n+1)^{th}$ first time unit, the transceiver sends a first signal from the start moment of the second COT to the end moment of the $(n+1)^{th}$ first time unit.

15. The communication apparatus according to claim 13 or 14, wherein when a first condition is met, the processor is configured to obtain the first COT, wherein the first condition comprises at least one of the following:

the processor is configured to determine to send second data in the $(n+2)^{th}$ first time unit;
the transceiver is configured to receive first indication information, wherein the first indication information indicates that at least one third terminal device reserves a resource of the $(n+2)^{th}$ first time unit, and a data priority of the at least one third terminal device is higher than a data priority of the communication apparatus; or
the transceiver is configured to receive second indication information from an access network device, wherein the second indication information indicates L.

16. The communication apparatus according to claim 15, wherein p comprises at least one of the following:

a channel access priority class of the communication apparatus; or
a channel access priority class of a fourth terminal device, wherein the fourth terminal device belongs to the at least one third terminal device.

17. The communication apparatus according to any one of claims 13 to 15, wherein that L is determined based on a channel access priority class p comprises:
L is determined based on a contention window size $CW_p$ corresponding to p and a quantity $m_p$ of continuous sensing time units corresponding to p.

18. The communication apparatus according to claim 17, wherein the first time unit is a slot, L represents a quantity of orthogonal frequency division multiplexing OFDM symbols, one slot comprises N OFDM symbols, and L satisfies the following calculation formula:

$L = N - ceil((CW_p \times T_{sl} + T_g)/t_{symbol})$, wherein
$T_{sl}$ is a sensing time unit and represents a minimum sensing granularity at which the communication apparatus performs channel access, $T_d$ is first duration for sensing a channel, $T_d$ comprises duration $T_f$ and $m_p T_{sl}$, $t_{symbol}$ is duration of one OFDM symbol, and the first duration is defer duration for detecting that the channel is idle in channel sensing.

19. The communication apparatus according to any one of claims 16 to 18, wherein the channel access priority class of the fourth terminal device is a channel access priority class of a third terminal device with a lowest priority in a channel access priority class of the at least one third terminal device.

20. The communication apparatus according to any one of claims 16 to 19, wherein the transceiver is configured to send third indication information to the second terminal device, wherein the third indication information indicates L.

21. The communication apparatus according to any one of claims 16 to 19, wherein the first indication information is sidelink control information SCI or a media access control control element (MAC CE) from the at least one third terminal device, and the SCI or the MAC CE comprises the channel access priority class of the at least one third terminal device; and

the second indication information is downlink control information DCI of an $i^{th}$ first time unit, and the DCI comprises at least one of the following information:

$(n-i+1)*N+L$ OFDM symbols; or
$n-i+1$ slots and L OFDM symbols;
or

the second indication information is downlink control information DCI of the $(n+1)^{th}$ first time unit, and the DCI comprises L, wherein
the first time unit is a slot, L represents a quantity of orthogonal frequency division multiplexing OFDM symbols, one slot comprises N OFDM symbols, and i is an integer greater than 0 and less than or equal to n+1.

22. The communication apparatus according to claim 20, wherein the third indication information is SCI or a MAC CE of an $i^{th}$ first time unit, and the SCI or the MAC CE comprises at least one of the following information:

$(n-i+1)*N+L$ OFDM symbols; or
$n-i+1$ slots and L OFDM symbols;
or
the third indication information is SCI or a MAC CE of the $(n+1)^{th}$ first time unit, and the SCI or the MAC CE comprises L, wherein
the first time unit is a slot, L represents a quantity of orthogonal frequency division multiplexing OFDM symbols, one slot comprises N OFDM symbols, and i is an integer greater than 0 and less than or equal to n+1.

23. A communication apparatus, comprising a processor and a transceiver, wherein

the processor is configured to control the transceiver to receive third indication information from a first terminal device, wherein the third indication information indicates a length L of a first time period, the first time period belongs to first channel occupancy time COT of the first terminal device, the first COT comprises n first time units and the first time period in an $(n+1)^{th}$ first time unit, the first COT is continuous in time, and the length of the first time period is less than a length of the first time unit; and
the processor is configured to control the transceiver to receive data from the first terminal device in the first COT based on the third indication information.

24. The communication apparatus according to claim 23, wherein the third indication information is SCI or a MAC CE of an $i^{th}$ first time unit, and the SCI or the MAC CE comprises at least one of the following information:

$(n-i+1)*N+L$ OFDM symbols; or
$n-i+1$ slots and L OFDM symbols;
or
the third indication information is SCI or a MAC CE of the $(n+1)^{th}$ first time unit, and the SCI or the MAC CE comprises L, wherein
the first time unit is a slot, L represents a quantity of orthogonal frequency division multiplexing OFDM symbols, one slot comprises N OFDM symbols, and i is an integer greater than 0 and less than or equal to n+1.

25. A computer-readable storage medium, comprising computer instructions, wherein when the computer instructions are executed, the communication method according to any one of claims 1 to 10 or the communication method according to claim 11 or 12 is implemented.

26. A communication apparatus, comprising a processor and a memory, wherein the memory is configured to store instructions, and when the processor executes the instructions stored in the memory, the communication method according to any one of claims 1 to 10 or the communication method according to claim 11 or 12 is implemented.

27. A communication apparatus, comprising a processor, wherein the processor is configured to be coupled to a memory, and read instructions in the memory, and when the processor executes the instructions, the communication method according to any one of claims 1 to 10 or the communication method according to claim 11 or 12 is implemented.

28. A computer program product, wherein the computer program product comprises computer instructions, and when some or all of the computer instructions are run on a communication apparatus, the communication method according to any one of claims 1 to 10 or the communication method according to claim 11 or 12 is implemented.

PLMN 1

FIG. 1

PLMN 1

FIG. 2

PLMN 1

FIG. 3

Communication
apparatus **400**

Storage unit **401**

Processing unit **402**

Communication unit
**403**

FIG. 4

Communication apparatus **500**

503

502

Transceiver

Processor

504

501

Memory

FIG. 5

First terminal
device

Second
terminal device

Third terminal
device

☐ Channel access phase
of a terminal device

The third terminal device
senses that a channel is idle

Information sending phase
of the terminal device

FIG. 6

FIG. 7

FIG. 8

Base station

DCI

Sending
terminal device

SCI + Data

Receiving
terminal device

FIG. 9

OFDM symbol                          OFDM symbol

CPE          CP      Data part in the OFDM symbol

Copy       Copy

LBT end moment

FIG. 10

FIG. 11

FIG. 12

FIG. 13

# EP 4 546 914 A1

## INTERNATIONAL SEARCH REPORT

| International application No. |
|---|
| **PCT/CN2023/099916** |

### A. CLASSIFICATION OF SUBJECT MATTER

H04W 72/04(2023.01)i

According to International Patent Classification (IPC) or to both national classification and IPC

### B. FIELDS SEARCHED

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, ENTXTC, ENTXT, DWPI, 3GPP: WIFI, 冲突, 抢占, LBT, COT, 信道占用时间, 非授权, 侧链, SL-U, 信道接入, 时隙, 长度, 优先级, 竞争窗口, CA, channel access, slot, mini slot, priority, length, n+1, CAPC, contention window, CW

### C. DOCUMENTS CONSIDERED TO BE RELEVANT

| Category* | Citation of document, with indication, where appropriate, of the relevant passages | Relevant to claim No. |
|---|---|---|
| A | OPPO. "Access Mechanisms of NR Sidelink in Unlicensed Channel" *3GPP TSG-RAN WG1 Meeting #109-e R1-2203982*, 20 May 2022 (2022-05-20), section 2, and figure 1 | 1-28 |
| A | CN 111800235 A (HUAWEI TECHNOLOGIES CO., LTD.) 20 October 2020 (2020-10-20) entire document | 1-28 |
| A | CN 113678560 A (GUANGDONG OPPO MOBILE TELECOMMUNICATIONS CORP., LTD.) 19 November 2021 (2021-11-19) entire document | 1-28 |
| A | US 2022070922 A1 (APPLE INC.) 03 March 2022 (2022-03-03) entire document | 1-28 |
| A | WO 2018059179 A1 (HUAWEI TECHNOLOGIES CO., LTD.) 05 April 2018 (2018-04-05) entire document | 1-28 |
| A | ZTE CORP. et al. "CAPAC for UL Configured Grant with SRB Data" *3GPP TSG-RAN2 Meeting #108 R2-1915519*, 22 November 2019 (2019-11-22), entire document | 1-28 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 September 2023** | **12 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**35**

**INTERNATIONAL SEARCH REPORT**
**Information on patent family members**

International application No.

**PCT/CN2023/099916**

| Patent document cited in search report | | | Publication date (day/month/year) | Patent family member(s) | | | Publication date (day/month/year) |
|---|---|---|---|---|---|---|---|
| CN | 111800235 | A | 20 October 2020 | WO | 2020207226 | A1 | 15 October 2020 |
| | | | | US | 2022030630 | A1 | 27 January 2022 |
| | | | | EP | 3944710 | A1 | 26 January 2022 |
| CN | 113678560 | A | 19 November 2021 | WO | 2020215330 | A1 | 29 October 2020 |
| | | | | EP | 3944705 | A1 | 26 January 2022 |
| | | | | US | 2022039152 | A1 | 03 February 2022 |
| US | 2022070922 | A1 | 03 March 2022 | WO | 2020167651 | A1 | 20 August 2020 |
| WO | 2018059179 | A1 | 05 April 2018 | CN | 107889114 | A | 06 April 2018 |

Form PCT/ISA/210 (patent family annex) (July 2022)